(19)

Europäisches Patentamt

European Patent Office

Office européen des brevets

(11) **EP 4 394 919 A1**

(12) **EUROPEAN PATENT APPLICATION**

(43) Date of publication:
**03.07.2024 Bulletin 2024/27**

(21) Application number: **23212311.7**

(22) Date of filing: **27.11.2023**

(51) International Patent Classification (IPC):
*H01M 4/131* (2010.01)     *H01M 4/133* (2010.01)
*H01M 4/36* (2006.01)      *H01M 4/48* (2010.01)
*H01M 4/505* (2010.01)     *H01M 4/525* (2010.01)
*H01M 4/587* (2010.01)     *H01M 4/62* (2006.01)
*H01M 10/0525* (2010.01)

(52) Cooperative Patent Classification (CPC):
**H01M 4/505; H01M 4/131; H01M 4/133;
H01M 4/364; H01M 4/366; H01M 4/483;
H01M 4/525; H01M 4/587; H01M 4/622;
H01M 4/625; H01M 10/0525**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.12.2022   KR 20220186371**

(71) Applicant: **Samsung SDI Co., Ltd.
Gyeonggi-do 17084 (KR)**

(72) Inventors:
• **Jo, Sungnim
17084 Yongin-si, Gyeonggi-do (KR)**

• **Son, Inhyuk
17084 Yongin-si, Gyeonggi-do (KR)**
• **Mah, Sangkook
17084 Yongin-si, Gyeonggi-do (KR)**
• **Shim, Kyueun
17084 Yongin-si, Gyeonggi-do (KR)**
• **Kapylou, Andrei
17084 Yongin-si, Gyeonggi-do (KR)**
• **Park, Taehyun
17084 Yongin-si, Gyeonggi-do (KR)**
• **Lee, Jinhyon
17084 Yongin-si, Gyeonggi-do (KR)**

(74) Representative: **Michalski Hüttermann & Partner
Patentanwälte mbB
Kaistraße 16A
40221 Düsseldorf (DE)**

(54) **DRY ELECTRODE FILM, AND DRY ELECTRODE AND LITHIUM BATTERY EACH INCLUDING THE SAME**

(57)     A dry electrode film, and a dry electrode and a lithium battery each including the dry electrode film are provided. The dry electrode film includes a dry electrode active material and a dry binder, wherein the dry electrode active material includes a core and a shell on a surface of the core, the shell includes at least one first metal oxide and a first carbonaceous material, the first metal oxide is located in a first carbonaceous material matrix, and the first metal oxide is represented by formula $M_aO_b$ (where $0<a\leq3$, $0<b<4$, and in the case where a is 1, 2, or 3, b is not an integer), wherein M includes at least one selected from elements of Groups 2 to 16 of the periodic table.

FIG. 1

EP 4 394 919 A1

**Description**

**CROSS-REFERENCE TO RELATED APPLICATION**

The present application claims priority to and the benefit of Korean Patent Application No. 10-2022-0186371, filed on December 27, 2022, in the Korean Intellectual Property Office, the entire content of which is incorporated herein by reference.

**BACKGROUND**

**1. Field**

One or more embodiments of the present disclosure relate to a dry electrode film, and a dry electrode and a lithium battery, each including the dry electrode film.

**2. Description of the Related Art**

To meet miniaturization and high performance of one or more suitable electronic devices, high energy density of lithium batteries is becoming important and attractive as well as miniaturization and weight reduction. For example, high-capacity lithium batteries are becoming important and/or desirable.

Because an excessive amount of a solvent is utilized to manufacture an electrode manufactured from a solvent-containing slurry, dry (e.g., solid-state) methods excluding an organic solvent are drawing attention and/or being studied.

**SUMMARY**

One or more aspects of embodiments of the present disclosure are directed toward a dry (e.g., solid-state) electrode film having improved cycle characteristics by reducing internal resistance and improving mechanical strength.

One or more aspects of embodiments of the present disclosure are directed toward a dry electrode including the dry electrode film.

One or more aspects of embodiments of the present disclosure are directed toward a lithium battery including the dry electrode.

Additional aspects will be set forth in part in the description which follows and, in part, will be apparent from the description, or may be learned by practice of the presented embodiments of the disclosure.

According to one or more embodiments of the present disclosure,

a dry electrode film includes a dry electrode active material and a dry binder,
wherein the dry electrode active material includes a core; and a shell on a surface of the core,
the shell includes at least one first metal oxide; and a first carbonaceous material,
the first metal oxide is in a first carbonaceous material matrix,
the first metal oxide is represented by formula $M_aO_b$ (where $0<a\leq3$, $0<b<4$, and in the case where a is 1, 2, or 3, b is not an integer), wherein M includes at least one selected from elements of Groups 2 to 16 of the periodic table.

According to one or more embodiments of the present disclosure,

a dry electrode includes an electrode current collector, and
the dry electrode film on one side or both (e.g., opposite) sides of the electrode current collector.

According to one or more embodiments of the present disclosure,

a lithium battery includes a first electrode, a second electrode, and an electrolytes between the first electrode and the second electrode, and
wherein the first electrode, the second electrode, or the combination thereof is the dry electrode.

**BRIEF DESCRIPTION OF THE DRAWINGS**

The accompanying drawing is included to provide a further understanding of the present disclosure, and is incorporated in and constitutes a part of this specification. The drawing illustrates example embodiments of the present disclosure and, together with the description, serve to explain principles of present disclosure. The above and other aspects, features, and advantages of certain embodiments of the disclosure will be more apparent from the following description taken in conjunction with the accompanying drawings, in which:

FIG. 1 is a schematic cross-sectional view of a dry positive active material according to one or more embodiments of the present disclosure.

FIG. 2 is a schematic cross-sectional view of a dry positive active material according to one or more embodiments of the present disclosure.

FIG. 3 is a scanning electron microscope (SEM) image of a surface of bare NCA91 prepared in Comparative Example 1 according to one or more embodiments of the present disclosure.

FIG. 4 is a SEM image of a composite positive active material prepared in Example 1 according to one or more embodiments of the present disclosure.

FIG. 5 is an image showing X-ray photoelectron spectroscopy (XPS) results of bare NCA91 prepared in Comparative Example 1, a composite prepared in Preparation Example 1, and a composite positive active material prepared in Example 1 according to one or more embodiments of the present disclosure.

FIG. 6 is an image showing Raman spectroscopy results of a composite prepared in Preparation Example 1 and a composite positive active material prepared in Example 1 according to one or more embodiments of the present disclosure.

FIG. 7A is a SEM image of a cross-section of a dry positive electrode prepared in Comparative Example 3 according to one or more embodiments of the present disclosure.

FIG. 7B is a SEM-EDS mapping image of a cross-section of a dry positive electrode prepared in Comparative Example 3 according to one or more embodiments of the present disclosure.

FIG. 8A is a SEM image of a cross-section of a dry positive electrode prepared in Example 4 according to one or more embodiments of the present disclosure.

FIG. 8B is a SEM-EDS mapping image of a cross-section of a dry positive electrode prepared in Example 4 according to one or more embodiments of the present disclosure.

FIG. 9 is a schematic diagram of a lithium battery according to one or more embodiments of the present disclosure.

FIG. 10 is a schematic diagram of a lithium battery according to one or more embodiments of the present disclosure.

FIG. 11 is a schematic diagram of a lithium battery according to one or more embodiments of the present disclosure.

## DETAILED DESCRIPTION

Reference will now be made in more detail to embodiments, examples of which are illustrated in the accompanying drawings, wherein like reference numerals refer to like elements throughout the present disclosure, and duplicative descriptions thereof may not be provided. In this regard, the embodiments of the present disclosure may have different forms and should not be construed as being limited to the descriptions set forth herein. Accordingly, the embodiments of the present disclosure are merely described, by referring to the drawings, to explain aspects of the present disclosure. As utilized herein, the term "and/or" or "or" may include any and all combinations of one or more of the associated listed items. Expressions such as "at least one of," "one of," and "selected from," when preceding a list of elements, modify the entire list of elements and do not modify the individual elements of the list. For example, "at least one of a, b or c", "at least one selected from a, b, and c", "at least one selected from among a to c", etc., may indicate only a, only b, only c, both (e.g., simultaneously) a and b, both (e.g., simultaneously) a and c, both (e.g., simultaneously) b and c, all of a, b, and c, or variations thereof. The "/" utilized herein may be interpreted as "and" or as "or" depending on the situation.

Various embodiments are illustrated in the accompanying drawings. The present disclosure may, however, be embodied in many different forms and should not be construed as limited to the embodiments set forth herein. Rather, the embodiments are provided so that this disclosure will be thorough and complete, and will fully convey the scope of the present disclosure to those skilled in the art. Like reference numerals in the drawings denote like elements.

It will be understood that when one element is referred to as being "on" another element, it may be directly on the other element, or intervening elements may also be present therebetween. In contrast, when one element is referred to as being "directly on" another element, there is no intervening element therebetween.

Although the terms "first", "second", "third", and/or the like may be utilized herein to describe one or more suitable elements, components, regions, layers, and/or sections, these elements, components, regions, layers and/or sections should not be limited by these terms. These terms are only utilized to distinguish one element, component, region, layer or section from another region, layer or section. Thus, a first element, component, region, layer, or section discussed could be termed a second element, component, region, layer or section without departing from the teachings herein.

The terms utilized herein is for the purpose of describing particular embodiments only and is not intended to be limiting of the present disclosure. As utilized herein, an expression utilized in the singular encompasses the expression "at least one", unless otherwise indicated. The "at least one" should not be construed as singular. As utilized herein, the terms such as "comprise(s)/include(s)," "have/has," "comprising/including," and/or "having" are intended to indicate the existence of features, regions, integers, operations, components, and/or elements disclosed in the specification, and are not intended to preclude the possibility that one or more other features, regions, integers, operations, components, and/or elements thereof may exist or may be added.

Spatially relative terms, such as "under", "below", "lower", "on", "above", or "upper", may be utilized herein for ease of description of the relationship of one element or feature to another element(s) or feature(s) as illustrated in the drawings. It will be understood that the spatially relative terms are intended to encompass different orientations of a device in utilization or operation, in addition to the orientation depicted in the drawings. For example, when the device in the drawings is turned over, elements described as "below" other elements or features would then be oriented "above" the other elements or features. Thus, the example term "below" may encompass both (e.g., simultaneously) an orientation of above and below. The device may be otherwise oriented (e.g., rotated 90 degrees or at other orientations) and the spatially relative descriptors utilized herein interpreted accordingly.

Unless otherwise defined, all terms (including technical and scientific terms) utilized herein have the same meaning as commonly understood by one or ordinary skill in the art to which this application belongs. Also, it will be further understood that terms, such as those defined in commonly utilized dictionaries, should be interpreted as having a meaning that is consistent with their meaning in the context of the relevant art and will not be interpreted in an idealized or overly formal sense unless expressly so defined herein.

Example embodiments will be described herein with reference to schematic cross-sectional view of one or more embodiments. As such, variations from the shapes of the illustrations as a result, for example, of manufacturing techniques and/or tolerances, may be to be expected. Thus, example embodiments should not be construed as limited to the particular shapes of regions illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the drawings are schematic in nature and their shapes are not intended to illustrate or limit the actual shape of a region of a device and thus are not intended to limit the scope of claims.

The term "Group" refers to a group of elements in the periodic table numbered from 1 to 18 classified according to a classification system of The International Union of Pure and Applied Chemistry ("IUPAC").

In the present disclosure, a "particle diameter" of particles indicates an average diameter of spherical particles or an average length of major axes of non-spherical particles. Particle diameters of particles may be measured utilizing a particle size analyzer (PSA). The "particle diameter" of particles may be, for example, an average particle diameter. The "average particle diameter" may be, for example, a median particle diameter (D50).

D50 refers to a particle diameter corresponding to 50 % of the particles in a cumulative particle diameter distribution curve measured by a laser diffraction method in which particles are accumulated in the order of particle diameter from the smallest particle to the largest particle.

D90 refers to a particle diameter corresponding to 90 % of the particles in a cumulative particle diameter distribution curve measured by a laser diffraction method in which particles are accumulated in the order of particle diameter from the smallest particle to the largest particle.

D10 refers to a particle diameter corresponding to 10 % of the particles in a cumulative particle diameter distribution curve measured by a laser diffraction method in which particles are accumulated in the order of particle diameter from the smallest particle to the largest particle.

In the present disclosure, the term "metal" may include metals and metalloids such as silicon and germanium in an elemental or ionic state.

In the present disclosure, the term "alloy" may refer to a mixture of two or more metals.

In the present disclosure, the term "electrode active material" may refer to a material for electrodes allowing lithiation and delithiation.

In the present disclosure, the term "positive active material" may refer to a material for positive electrodes allowing lithiation and delithiation.

In the present disclosure, the term "negative active material" may refer to a material for negative electrodes allowing lithiation and delithiation.

In the present disclosure, the terms "lithiation" and "lithiating" may refer to a process of adding lithium to an electrode active material.

In the present disclosure, the terms "delithiation" and "delithiating" may refer to a process of removing lithium from an electrode active material.

In the present disclosure, the terms "charging" and "charge" may refer to a process of supplying electrochemical energy to a battery.

In the present disclosure, the terms "discharging" and "discharge" may refer to a process of removing electrochemical energy from a battery.

In the present disclosure, the terms "positive electrode" and "cathode" may refer to an electrode in which electrochemical reduction and lithiation occur during discharging.

In the present disclosure, the terms "negative electrode" and "anode" may refer to an electrode in which electrochemical oxidation and delithiation occur during discharging.

While example embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modification, variations, improvements, and substantial equivalents.

Hereinafter, a dry electrode film, and a dry electrode and a lithium battery each including the dry electrode film according to one or more embodiments will be described in more detail.

A dry (e.g., solid-state) electrode film according to one or more embodiments may include a dry electrode active material and a dry binder, wherein the dry electrode active material may include a core and a shell on a surface of the core, the shell may include at least one first metal oxide and a first carbonaceous material, the first metal oxide is in a first carbonaceous material matrix (e.g., a matrix of the first carbonaceous material), the first metal oxide may be represented by formula $M_aO_b$ (where $0<a\leq3$, $0<b<4$, and in the case (e.g., embodiments) where a is 1, 2, or 3, b is not an integer), wherein M may include at least one metal selected from elements of Groups 2 to 16 of the periodic table.

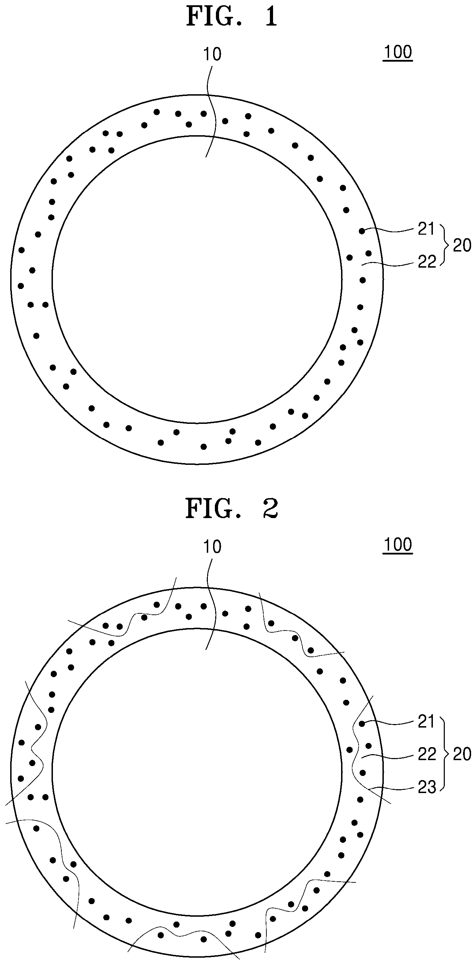

Referring to FIG. 1, a dry electrode active material 100 may include a core 10 and a shell 20 continuously or discontinuously on (e.g., located on) a surface of the core 10. The shell 20 may cover the core 10 in whole or in part. The shell 20 may include a first metal oxide 21 and a first carbonaceous material 22. The dry electrode active material may be, for example, an electrode active material that is not impregnated with, dissolved in, or dispersed in a processing solvent during a process of manufacturing a dry electrode film. The dry electrode active material may be, for example, an electrode active material that does not include a processing solvent or may not be in contact with a processing solvent during a process of manufacturing a dry electrode film.

Because the dry electrode active material has the core/shell structure and the shell includes the first carbonaceous material, the dry electrode active material may be mixed with the dry binder more uniformly. Therefore, aggregation of the dry binder may be inhibited in the dry electrode film, and the dry binder may be substantially uniformly dispersed in three dimensions. Because formation of a local resistance region is inhibited in the dry electrode film, imbalance in current density may be reduced, and the overall internal resistance of the dry electrode film may be reduced.

Because the dry electrode active material has the core/shell structure and the shell includes the first carbonaceous material, interfacial resistance between a plurality of the dry electrode active materials may be reduced. Because the dry electrode active material has the core/shell structure and the shell includes the first carbonaceous material, internal resistance of the dry electrode film may be reduced. Because the dry electrode active material has the core/shell structure and the shell includes the first carbonaceous material, binding force between the dry electrode active material and the dry binder may be improved. Because the dry electrode active material has the core/shell structure and the shell includes the first carbonaceous material, mechanical properties, such as tensile strength, of the dry electrode film may be improved. Because the dry electrode film has reduced internal resistance and improved mechanical properties, cycle characteristics of a lithium battery including the dry electrode film may be improved.

In one or more embodiments, the shell including the first metal oxide may have improved ionic conductivity, compared to a shell formed of a carbonaceous material, and thus ionic conductivity of a dry electrode active material may be improved.

In one or more embodiments, the dry electrode active material may have a core/shell structure and the shell may be continuously or discontinuously disposed on a surface of the core. Because the shell includes the first metal oxide located (e.g., dispersed) in the first carbonaceous material matrix, the shell may be disposed on the core more uniformly. Because the shell is introduced onto the core from a composite including the first metal oxide located in the first carbonaceous material matrix, the shell does not aggregate and may be disposed on the core more uniformly. The shell uniformly disposed on the core effectively blocks contact between the core and an electrolytic solution, thereby preventing or reducing side reactions caused by the contact between the core and an electrolyte. In some embodiments, cation mixing caused by the contact between the core and the electrolyte is inhibited, thereby preventing or reducing formation of a resistance layer on the surface of the core. In some embodiments, the shell introduced onto the core may inhibit elution of ions of a transition metal from the core including the transition metal. In one or more embodiments, the first carbonaceous material may be, for example, a crystalline carbonaceous material. In one or more embodiments, the first carbonaceous material may be, for example, a carbonaceous nanostructure. In one or more embodiments, the first carbonaceous material may be, for example, a two-dimensional carbonaceous nanostructure. In some embodiments, the first carbonaceous material may be, for example, graphene. For example, because the shell including graphene and/or a matrix thereof is flexible, a volume change of the dry electrode active material is easily accepted and/or tolerated during charging and discharging, and thus occurrence of cracks inside the dry electrode active material may be inhibited. Because graphene has high electronic conductivity, interfacial resistance between the dry electrode active material and the electrolytic solution (e.g., electrolyte) is reduced. Therefore, although the shell including graphene is introduced, an increase in internal resistance of a lithium battery may be inhibited. In contrast, comparable carbonaceous materials not including the first metal oxide may easily aggregate failing to be uniformly disposed on the core of the dry electrode active material. In some embodiments, the first carbonaceous material matrix derived from, for example, a graphene matrix has relatively low density and high porosity compared to comparable carbonaceous materials derived from a graphite-based material.

The dry electrode active material has a core/shell structure. The shell includes the first metal oxide, and metal contained in the first metal oxide may include, for example, at least one selected from aluminum (Al), niobium (Nb), magnesium (Mg), scandium (Sc), titanium (Ti), zirconium (Zr), vanadium (V), tungsten (W), manganese (Mn), iron (Fe), cobalt (Co), palladium (Pd), copper (Cu), silver (Ag), zinc (Zn), antimony (Sb), and selenium (Se). The first metal oxide may include, for example, at least one selected from $Al_2O_z$ (where $0<z<3$), $NbO_x$ (where $0<x<2.5$), $MgO_x$ (where $0<x<1$), $Sc_2O_z$ (where $0<z<3$), $TiO_y$ (where $0<y<2$), $ZrO_y$ (where $0<y<2$), $V_2O_z$ (where $0<z<3$), $WO_y$ (where $0<y<2$), $MnO_y$ (where $0<y<2$), $Fe_2O_z$ (where $0<z<3$), $Co_3O_w$ (where $0<w<4$), $PdO_x$ (where $0<x<1$), $CuO_x$ (where $0<x<1$), $AgO_x$ (where $0<x<1$), $ZnO_x$ (where $0<x<1$), $Sb_2O_z$ (where $0<z<3$), and $SeO_y$ (where $0<y<2$). By locating the first metal oxide in the first carbonaceous material matrix, uniformity of the shell disposed on the core is improved, and high-voltage resistance of the dry electrode active material is further improved. In some embodiments, the shell may include, for example, $Al_2Ox$ (where $0<x<3$) as the first metal oxide.

In one or more embodiments, the shell may further include at least one second metal oxide. The second metal oxide may be represented by, for example, formula $M_aO_c$ (where $0<a\leq3$, $0<c\leq4$, and in the case (e.g., embodiments) where a is 1, 2, or 3, c is an integer), wherein M may include at least one metal selected from elements of Groups 2 to 13, 15, and 16 of the periodic table. In some embodiments, the second metal oxide may include, for example, the same metal as that of the first metal oxide. A c/a ratio of the second metal oxide may have a greater value than a b/a ratio of the first metal oxide. For example, $c/a > b/a$. The second metal oxide may be located in the first carbonaceous material matrix. The second metal oxide may be selected from, for example, $Al_2O_3$, $NbO$, $NbO_2$, $Nb_2O_5$, $MgO$, $Sc_2O_3$, $TiO_2$, $ZrO_2$, $V_2O_3$, $WO_2$, $MnO_2$, $Fe_2O_3$, $Co_3O_4$, $PdO$, $CuO$, $AgO$, $ZnO$, $Sb_2O_3$, and $SeO_2$. The first metal oxide may be, for example, a reduction product of the second metal oxide. The first metal oxide may be obtained as a result of reduction of a part of or the entire second metal oxide. Therefore, the first metal oxide has a lower oxygen content (e.g., amount) and a lower metal oxidation number compared to the second metal oxide. For example, in some embodiments, the shell includes $Al_2O_x$ (where $0<x<3$) as the first metal oxide and $Al_2O_3$ as the second metal oxide.

In one or more embodiments, the shell may include, for example, at least one selected from the first metal oxide and the second metal oxide, and a particle diameter of the at least one selected from the first metal oxide and the second metal oxide may be, for example, from 0.1 nm to 100 nm, from 0.5 nm to 100 nm, from 1 nm to 100 nm, from 1 nm to 50 nm, from 1 nm to 30 nm, from 5 nm to 30 nm, or from 10 nm to 30 nm. The first metal oxide and/or the second metal oxide may be dispersed more uniformly in the first carbonaceous material matrix by having the nanoscale particle diameters within the ranges described above. In embodiments in which the particle diameter of at least one of the first metal oxide or the second metal oxide is excessively large, a thickness of the shell increases to raise internal resistance of a composite electrode active material. In embodiments in which the particle diameter of at least one of the first metal oxide or the second metal oxide is excessively small, substantially uniform distribution thereof may be difficult.

In one or more embodiments, the shell may include the first metal oxide and/or the second metal oxide and include the first carbonaceous material. The first carbonaceous material may be arranged in a direction protruding from the surfaces of the first metal oxide and/or the second metal oxide. The first carbonaceous material may directly grow from the surface of the first metal oxide and/or the second metal oxide to be arranged in the direction protruding from the surface of the first metal oxide and/or the second metal oxide. The first carbonaceous material arranged in the direction protruding from the surface of the first metal oxide and/or the second metal oxide may be, for example, a carbonaceous two-dimensional nanostructure, a carbonaceous flake, and/or graphene.

In one or more embodiments, the shell may have a thickness of, for example, 0.1 nm to 5 $\mu$m, 0.5 nm to 5 $\mu$m, 1 nm to 5 $\mu$m, 1 nm to 1 $\mu$m, 1 nm to 500 nm, 1 nm to 200 nm, 1 nm to 100 nm, 1 nm to 50 nm, 1 nm to 30 nm, or 1 nm to 20 nm. In embodiments in which the thickness of the shell is within the ranges described above, the dry electrode including the dry electrode active material may have further improved electronic conductivity and further reduced internal resistance.

In one or more embodiments, the shell may have a single-layer or multi-layer structure. The multi-layer structure may have a double-layer structure, a triple-layer structure, and a quadruple-layer structure. In the multi-layer structure, types (kinds) of metals of the first metal oxide included respectively in different layers may be different from each other.

In one or more embodiments, an amount of the shell may be, for example, from 0.01 wt% to 5 wt%, from 0.01 wt% to 3 wt%, from 0.01 wt% to 2 wt%, or from 0.01 wt% to 1 wt%, based on a total wight of the dry electrode active material. An amount of the first metal oxide may be, for example, from 0.006 wt% to 3 wt%, from 0.06 wt% to 1.8 wt%, from 0.006 wt% to 1.2 wt%, or from 0.006 wt% to 0.6 wt%, based on a total wight of the dry electrode active material. In embodiments in which the amounts of the shell and the first metal oxide are within the ranges above in the dry electrode active material, cycle characteristics of the lithium battery are further improved.

In one or more embodiments, the dry electrode active material may further include, for example, a third metal doped on the core or a third metal oxide coated on the core. In some embodiments, the shell may be on (e.g., disposed on) the third metal doped on the core or the third metal oxide coated on the core. For example, after doping the third metal on the surface of a compound contained in the core, for example, a lithium transition metal oxide, or coating the third metal oxide on the compound contained in the core, for example, the lithium transition metal oxide, the shell may be disposed on the third metal and/or the third metal oxide. For example, in one or more embodiments, the dry electrode active material may include: a core; an interlayer disposed on the core; and a shell disposed on the interlayer, wherein the interlayer may include a third metal and/or a third metal oxide. The third metal may include at least one metal selected from Al, Zr, W, and Co, and the third metal oxide may be $Al_2O_3$, $Li_2O\text{-}ZrO_2$, $WO_2$, $CoO$, $Co_2O_3$, $Co_3O_4$, or a combination thereof.

The shell disposed on the surface of the core may be, for example, a dry coating layer. The shell may be introduced onto the core by a dry method, such as, by milling. In some embodiments, the shell disposed on the surface of the core may include, for example, at least one selected from a composite including the first metal oxide and the first carbonaceous material, such as, graphene, and a product obtained by milling the composite. The first metal oxide is located in a matrix of the first carbonaceous material, for example, a graphene matrix.

For example, in some embodiments, the shell may be prepared from a composite including the first metal oxide and the carbonaceous material, such as, graphene. In some embodiments, the composite may further include the second metal oxide in addition to the first metal oxide. In some embodiments, the composite may include, for example, two or more types (kinds) of first metal oxides. In some embodiments, the composite may include, for example, two or more types (kinds) of first metal oxides and two or more types (kinds) of second metal oxides.

In one or more embodiments, an amount of the at least one of the composite or the milling product thereof may be 5 wt% or less, 3 wt% or less, 2 wt% or less, 1 wt% or less, or 0.5 wt% or less based on the total weight of the dry electrode active material. In some embodiments, the amount of the at least one of the composite or the milling product thereof may be from 0.01 wt% to 5 wt%, from 0.01 wt% to 3 wt%, from 0.01 wt% to 1 wt%, from 0.01 wt% to 0.7 wt%, or from 0.01 wt% to 0.5 wt% based on the total weight of the dry electrode active material. In embodiments in which the dry electrode active material includes the at least one of the composite or the milling product thereof within the ranges described above, cycle characteristics of the lithium battery including the dry electrode active material are further improved.

The composite may include at least one selected from the first metal oxide and the second metal oxide. A particle diameter of the at least one selected from the first metal oxide and the second metal oxide may be from 0.1 nm to 100 nm, from 0.5 nm to 100 nm, from 1 nm to 100 nm, from 1 nm to 50 nm, from 1 nm to 30 nm, from 5 nm to 30 nm, or from 10 nm to 30 nm. The first metal oxide and/or the second metal oxide may be dispersed more uniformly in the first carbonaceous material matrix of the composite by having the nanoscale particle diameters within the ranges described above. Therefore, the composite may be uniformly coated on the core without aggregating to form a shell. In some embodiments, the first metal oxide and/or the second metal oxide may be disposed on the core more uniformly by having the particle diameter within the ranges described above. Therefore, by uniformly disposing the first metal oxide and/or the second metal oxide on the core, high-voltage resistance may be more effectively obtained. The particle diameters of the first metal oxide and/or the second metal oxide may be measured by a measurement apparatus utilizing a laser diffraction method or a dynamic light scattering method. In one or more embodiments, the particle diameter may be measured by utilizing, for example, a laser scattering particle size distribution analyzer (e.g., LA-920 from Horiba Instruments, Inc.), and may be a median particle diameter (D50) at 50 % of a total cumulative particle diameter distribution of particles from the smallest particle diameter. A uniformity deviation of at least one selected from the first metal oxide and/or the second metal oxide may be 3 % or less, 2 % or less, or 1 % or less. The uniformity may be obtained, for example, by X-ray photoelectron spectroscopy (XPS). Accordingly, at least one selected from the first metal oxide and the second metal oxide may have a uniformity deviation of 3% or less, 2 % or less, or 1 % or less and may be uniformly dispersed in the composite.

In one or more embodiments, the composite includes the first carbonaceous material. The first carbonaceous material may have, for example, a branched structure, and at least one metal oxide selected from the first metal oxide and the second metal oxide may be dispersed in the branched structure of the first carbonaceous material. The branched structure of the first carbonaceous material may include, for example, a plurality of particles of the first carbonaceous material in contact with each other. Because the first carbonaceous material has a branched structure, one or more suitable conduction paths may be provided. in some embodiments, the first carbonaceous material may be, for example, graphene. Graphene may have, for example, a branched structure, and at least one metal oxide selected from the first metal oxide and the second metal oxide may be dispersed in the branched structure of graphene. The branched structure of graphene includes a plurality of graphene particles contacting each other. Because graphene has the branched structure, one or more suitable conduction paths may be provided.

In one or more embodiments, the first carbonaceous material may have, for example, a spherical structure (e.g., substantially spherical structure), at least one metal oxide selected from the first metal oxide and the second metal oxide may be dispersed in the spherical structure. The spherical structure of the first carbonaceous material may have a size of 50 nm to 300 nm. There may be a plurality of first carbonaceous materials having a spherical structure. Because the first carbonaceous material has the spherical structure, the composite may have a rigid structure. In some embodiments, the first carbonaceous material may be, for example, graphene. Graphene may have, for example, a spherical structure, and at least one metal oxide selected from the first metal oxide and the second metal oxide may be dispersed in the spherical structure. The spherical structure of graphene may have a size of 50 nm to 300 nm. There may be a plurality of graphenes having a spherical structure. Because the graphene has the spherical structure, the composite may have a rigid structure.

In one or more embodiments, the first carbonaceous material may have, for example, a spiral structure in which a plurality of spherical structures (e.g., substantially spherical structures) are connected, and at least one metal oxide selected from the first metal oxide and the second metal oxide may be dispersed in the spherical structures of the spiral structure. The spiral structure of the first carbonaceous material may have a size of 500 nm to 100 μm. Because the first carbonaceous material has the spiral structure, the composite may have a rigid structure. In some embodiments, The first carbonaceous material may be, for example, graphene. Graphene may have, for example, a spiral structure in which a plurality of spherical structures (e.g., substantially spherical structures) are connected, and at least one metal oxide selected from the first metal oxide and the second metal oxide may be dispersed in the spherical structures of the spiral structure. The spiral structure of graphene may have a size of 500 nm to 100 μm. Because, graphene has the spiral structure, the composite may have a rigid structure.

In one or more embodiments, the first carbonaceous material may have, for example, a cluster structure in which a plurality of spherical structures (e.g., substantially spherical structures) aggregate, and at least one metal oxide selected from the first metal oxide and the second metal oxide may be dispersed in the spherical structures of the cluster structure. The cluster structure of the first carbonaceous material may have a size of 0.5 mm to 10 mm. Because the first carbonaceous material has the cluster structure, the composite may have a rigid structure. in some embodiments, the first carbonaceous material may be, for example, graphene. Graphene may have, for example, a cluster structure in which a plurality of spherical structures (e.g., substantially spherical structures) aggregate, and at least one metal oxide selected from the first metal oxide and the second metal oxide may be dispersed in the spherical structures of the cluster structure. The cluster structure of graphene may have a size of 0.5 mm to 10 mm. Because graphene has the cluster structure, the composite may have a rigid structure.

In one or more embodiments, the composite may have, for example, a crumpled faceted-ball structure, and at least one metal oxide selected from the first metal oxide and the second metal oxide may be dispersed inside or on the surface of the crumpled faceted-ball structure. Because the composite has the faceted-ball structure, the composite may be easily coated on non-substantially uniform surface irregularities of the core.

In one or more embodiments, the composite may have, for example, a planar structure, and at least one metal oxide selected from the first metal oxide and the second metal oxide may be dispersed inside or on the surface of the planar structure. Because the composite has such a two-dimensional planar structure, the composite may be easily coated on non-substantially uniform surface irregularities of the core.

In one or more embodiments, the first carbonaceous material may extend from the first metal oxide by a distance of 10 nm or less and may include at least 1 to 20 carbonaceous material layers. For example, by stacking the plurality of first carbonaceous material layers, the first carbonaceous material having a total thickness of 12 nm or less may be on (e.g., disposed on) the first metal oxide. For example, in some embodiments, the total thickness of the first carbonaceous material may be from 0.6 nm to 12 nm. In some embodiments, the first carbonaceous material may be, for example, graphene. Graphene may extend from the first metal oxide by a distance of 10 nm or less and may include at least 1 to 20 graphene layers. For example, by stacking the plurality of graphene layers, graphene having a total thickness of 12 nm or less may be on (e.g., disposed on) the first metal oxide. For example, in some embodiments, the total thickness of graphene may be from 0.6 nm to 12 nm.

In one or more embodiments, the shell may further include, for example, a second carbonaceous material distinguished from the first carbonaceous material. For example, in one or more embodiments, the shell may further include the second carbonaceous material, that is fibrous carbon, with an aspect ratio of 10 or more. Therefore, a conduction path of the dry electrode active material may further be lengthened. The second carbonaceous material may form a three-dimensional conductive network among a plurality of particles of the dry electrode active material to reduce internal resistance of the dry electrode including the dry electrode active material. Because the fibrous carbon is fixed on the dry electrode active material, a substantially uniform and stable three-dimensional conductive network may be formed among the plurality of particles of the dry electrode active material. Therefore, because the dry electrode active material includes the second carbonaceous material, high rate characteristics of a lithium battery including the dry electrode active material may be improved. In contrast, in an comparable example of a simple mixture of the core and the fibrous carbon, as the second carbonaceous material, it is difficult to form a substantially uniform three-dimensional conductive network among the plurality of core particles due to aggregation of the fibrous carbon. In one or more embodiments, the second carbonaceous material 23 (shown in FIG. 2) may be disposed on the surface of the dry electrode active material 100.

Referring to FIG. 2, a dry electrode active material 100 may include a core 10 and a shell 20 continuously or discontinuously on (e.g., disposed on) the surface of the core 10. The shell 20 may cover the core 10 in whole or in part. The shell 20 may include a first metal oxide 21, a first carbonaceous material 22, and a second carbonaceous material 23. The second carbonaceous material 23 may protrude from a surface of the dry electrode active material 100. The second carbonaceous material 23 may effectively provide a conductive network among the plurality of dry electrode active materials 100. Because the second carbonaceous material 23 is located in a matrix of the first carbonaceous material 22, the second carbonaceous material 23 may be easily coated on the core 10. The matrix of the first carbonaceous material 22 may act as a binder for binding of the core to the second carbonaceous material 23. Accordingly, in an embodiment in which the matrix of the first carbonaceous material 22 is not utilized, it is difficult to attach the second carbonaceous material 23 to the core 10, or the second carbonaceous material 23 may be easily detached from the core 10 during a process of manufacturing a slurry for a positive electrode. In an embodiment in which a binder is added for binding a lithium transition metal oxide core 10 and the second carbonaceous material 23, the core 10 is coated with an insulating binder and thus internal resistance of the dry electrode active material 100 may be increased. In an embodiment of heat treating the core coated with the second carbonaceous material and a binder to carbonize the binder, the core 10 and the second carbonaceous material 23 may deteriorate during the heat treatment process.

In one or more embodiments, the second carbonaceous material may have an aspect ratio of 10 or more or 20 or more. In some embodiments, the aspect ratio of the second carbonaceous material may be, for example, from 10 to 100,000, from 10 to 80,000, from 10 to 50,000, from 10 to 10,000, from 10 to 5000, from 10 to 1000, from 10 to 500, from 10 to 100, or from 10 to 50. The aspect ratio of the second carbonaceous material may be, for example, a ratio of a length of the major axis passing through the center of the second carbonaceous material to a length of the minor axis passing through the center of the second carbonaceous material and perpendicular to the major axis, i.e., a diameter of the second carbonaceous material.

In one or more embodiments, the second carbonaceous material may have a diameter of, for example 50 nm or less, 30 nm or less, 20 nm or less, or 10 nm or less. In some embodiments, the second carbonaceous material may have a diameter of, for example, 1 nm to 50 nm, 1 nm to 30 nm, or 1 nm to 10 nm. In an embodiment in which the diameter of the second carbonaceous material is excessively large, an absolute number of strands per volume decreases, and the effects on reducing internal resistance may be negligible. In a comparable example in which the diameter of the second carbonaceous material is too small, substantially uniform dispersion may be difficult.

In one or more embodiments, the second carbonaceous material may have a length of, for example, 1000 $\mu$m or less, 100 $\mu$m or less, 50 $\mu$m or less, 10 $\mu$m or less, 5 $\mu$m or less, 2 $\mu$m or less, 1 $\mu$m or less, 500 nm or less, or 300 nm or less. In some embodiments, the second carbonaceous material may have a length of, for example, 100 nm to 1000 $\mu$m, 100 nm to 500 $\mu$m, 100 nm to 100 $\mu$m, 100 nm to 50 $\mu$m, 100 nm to 10 $\mu$m, 100 nm to 5 $\mu$m , 100 nm to 2 $\mu$m, 100 nm to 1 $\mu$m, 100 nm to 500 nm, or 100 nm to 300 nm. In some embodiments, the second carbonaceous material may have a length of, for example, 500 nm to 1000 $\mu$m, 500 nm to 500 $\mu$m, 500 nm to 100 $\mu$m, 500 nm to 50 $\mu$m, 500 nm to 10 $\mu$m, 500 nm to 5 $\mu$m, or 500 nm to 2 $\mu$m. As the length of the second carbonaceous material increases, internal resistance of the electrode may be reduced. In a comparable example in which a length of the second carbonaceous material is too small, it is difficult to provide an effective conduction path.

In one or more embodiments, the second carbonaceous material may include, for example, carbon nanofibers, carbon nanotubes, or a combination thereof.

The carbon nanotube may include a carbon nanotube primary structure, a carbon nanotube secondary structure formed by aggregation of a plurality of carbon nanotube primary particles, or a combination thereof.

The carbon nanotube primary structure may be one carbon nanotube unit. The carbon nanotube unit has a graphite sheet in a cylindrical shape with a nano-size diameter and has a sp2 binding structure. According to a bending angle and structure of the graphite sheet, characteristics of the conductor or characteristics of the semiconductor may be exhibited. Carbon nanotube units may be classified into either single-walled carbon nanotubes (SWCNTs), double-walled carbon nanotubes (DWCNTs), or multi-walled carbon nanotubes (MWCNTs), according to the number of bonds constituting the wall. As the wall thickness of the carbon nanotube unit decreases, resistance decreases.

The carbon nanotube primary structure may include, for example, single-walled carbon nanotubes (SWCNTs), double-walled carbon nanotubes (DWCNTs), multi-walled carbon nanotubes (MWCNTs), or a combination thereof. The carbon nanotube primary structure may have a diameter (e.g., average cross-sectional breadth or major axis) of, for example, 1 nm or more or 2 nm or more. The diameter of the carbon nanotube primary structure may be, for example, 20 nm or less or 10 nm or less. In some embodiments, the diameter of the carbon nanotube primary structure may be, for example, from 1 nm to 20 nm, from 1 nm to 15 nm, or from 1 nm to 10 nm. The carbon nanotube primary structure may have a length (e.g., average longitudinal length) of, for example, 100 nm or more or 200 nm or more. The length of the carbon nanotube primary structure may be, for example, 2 $\mu$m or less, 1 $\mu$m or less, 500 nm or less, or 300 nm or less. In some embodiments, the length of the carbon nanotube primary structure may be, for example, from 100 nm to 2 $\mu$m, from 100 nm to 1 $\mu$m, from 100 nm to 500 nm, from 100 nm to 400 nm, from 100 nm to 300 nm, or from 200 nm to 300 nm. The diameter and length of the carbon nanotube primary structure may be measured from a scanning electron microscope (SEM) image or a transmission electron microscope (TEM) image. In some embodiments, the diameter and/or length (e.g., average) of the carbon nanotube primary structure may be measured by a laser diffraction method.

The carbon nanotube secondary structure is a structure formed by assembling the carbon nanotube primary structures to form bundle-type or kind carbon nanotubes or rope-type or kind carbon nanotubes in whole or in part. The carbon nanotube secondary structure may include, for example, bundle-type or kind carbon nanotubes, rope-type or kind carbon nanotubes, or a combination thereof. The carbon nanotube secondary structure may have a diameter of, for example, 2 nm or more or 3 nm or more. The carbon nanotube secondary structure may have a diameter of, for example, 50 nm or less, 30 nm or less, 20 nm or less or 10 nm or less. In some embodiments, the carbon nanotube secondary structure may have a diameter of, for example 2 nm to 50 nm, 2 nm to 30 nm, or 2 nm to 20 nm. The carbon nanotube secondary structure may have a length of, for example, 500 nm or more, 700 nm or more, 1 $\mu$m or more, or 10 $\mu$m or more. The carbon nanotube secondary structure may have a length of, for example, 1000 $\mu$m or less, 500 $\mu$m or less, or 100 $\mu$m or less. In some embodiments, the carbon nanotube secondary structure may have a length of, for example, 500 nm to 1000 $\mu$m, 500 nm to 500 $\mu$m, 500 nm to 200 $\mu$m, 500 nm to 100 $\mu$m, or 500 nm to 50 $\mu$m. The diameter and length of the carbon nanotube secondary structure may be measured from a scanning electron microscope (SEM) image or utilizing an optical microscope. In some embodiments, the diameter and/or length of the carbon nanotube secondary structure may be measured by a laser diffraction method.

The carbon nanotube secondary structure may be utilized for preparation of a dry electrode active material after being converted into the carbon nanotube primary structure.

In one or more embodiments, an amount of the second carbonaceous material may be, for example, from 0.1 wt% to 50 wt%, from 1 wt% to 40 wt%, or from 5 wt% to 30 wt% based on a total weight of the first carbonaceous material and the second carbonaceous material. Because the dry electrode active material includes the first carbonaceous material and the second carbonaceous material in amounts within the ranges above, a conduction path is more effectively formed in the dry electrode active material, so that internal resistance of the dry electrode active material may further be reduced. As a result, cycle characteristics of a lithium battery including the dry electrode active material may further be improved. In some embodiments, the amount of the second carbonaceous material may be, for example, from 0.001 wt% to 5 wt%, from 0.01 wt% to 3 wt%, from 0.01 wt% to 1 wt%, from 0.01 wt% to 0.5 wt%, or from 0.01 wt% to 0.1 wt%, based on a total weight of the dry electrode active material. Because the amount of the second carbonaceous material included in the dry electrode active material is within the ranges described above, a conduction path is formed in the dry electrode active material, so that internal resistance of the dry electrode active material may further be reduced. As a result, cycle characteristics of a lithium battery including the dry electrode active material may further be improved.

The dry electrode active material may include a core, and the core may include, for example, a lithium transition metal oxide.

In one or more embodiments, the core may include, for example, a compound selected from lithium transition metal oxides represented by Formulae 1 to 8.

**Formula 1**    $Li_aNi_xCo_yM_zO_{2-b}A_b$

In Formula 1,

1.0≤a≤1.2, 0≤b≤0.2, 0.8≤x<1, 0≤y≤0.3, 0<z≤0.3, and x+y+z=1,
M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
A may be fluorine (F), sulfur (S), chlorine (Cl), bromine (Br), or a combination thereof.

**Formula 2**    $LiNi_xCo_yMn_zO_2$

**Formula 3**    $LiNi_xCo_yAl_zO_2$

In Formulae 2 and 3, 0.8≤x≤0.95, 0≤y≤0.2, 0<z≤0.2 and x+y+z=1.

**Formula 4**    $LiNi_xCo_yMn_zAl_wO_2$

In Formula 4, 0.8≤x≤0.95, 0≤y≤0.2, 0<z≤0.2, 0<w≤0.2, and x+y+z+w=1.

**Formula 5**        $Li_aCo_xM_yO_{2-b}A_b$

In Formula 5,

$1.0 \leq a \leq 1.2$, $0 \leq b \leq 0.2$, $0.9 \leq x \leq 1$, $0 \leq y \leq 0.1$, and $x+y=1$,
M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
A may be F, S, Cl, Br, or a combination thereof.

**Formula 6**        $Li_aNi_xMnyM'_zO_{2-b}A_b$

In Formula 6,

$1.0 \leq a \leq 1.2$, $0 \leq b \leq 0.2$, $0 < x \leq 0.3$, $0.5 \leq y < 1$, $0 < z \leq 0.3$, and $x+y+z=1$,
M' may be cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
A may be F, S, Cl, Br, or a combination thereof.

**Formula 7 Li**        $_aM1_xM2_yPO_{4-b}X_b$

In Formula 7, $0.90 \leq a \leq 1.1$, $0 \leq x \leq 0.9$, $0 \leq y \leq 0.5$, $0.9 < x+y < 1.1$, and $0 \leq b \leq 2$,

M1 may be chromium (Cr), manganese (Mn), iron (Fe), cobalt (Co), nickel (Ni), copper (Cu), zirconium (Zr), or a combination thereof,
M2 may be magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof, and X may be O, F, S, P, or a combination thereof.

**Formula 8**        $Li_aM3_zPO_4$

In Formula 8, $0.9 \leq a \leq 1.1$ and $0.9 \leq z \leq 1.1$, and
M3 may be chromium (Cr), manganese (Mn), iron (Fe), cobalt (Co), nickel (Ni), copper (Cu), zirconium (Zr), or a combination thereof.
In one or more embodiments, the shell may include the first metal oxide and the first carbonaceous material, and the core may include, for example, a lithium transition metal oxide. The first carbonaceous material may be chemically bound to a transition metal of the lithium transition metal oxide, for example, by a chemical bond. A carbon atom (C) of the first carbonaceous material may be chemically bound to a transition metal (Me) of the lithium transition metal oxide, for example, via an oxygen atom through a C-O-Me bond (e.g., C-O-Ni bond or C-O-Co bond). The core is combined with the shell as the first carbonaceous material located in the shell is chemically bound to the lithium transition metal oxide located in the core by a chemical bond. Therefore, the dry electrode active material is distinguished from a simple physical mixture or blend of the first carbonaceous material and the lithium transition metal oxide. The first metal oxide may be chemically bound to the first carbonaceous material by a chemical bond. In this regard, the chemical bond is, for example, covalent bond or ionic bond.
In one or more embodiments, the dry electrode active material may include, for example, a first dry electrode active material and a second dry electrode active material. The first dry electrode active material and the second dry electrode active material may have different particle diameters.
The first dry electrode active material may be, for example, a large-diameter dry electrode active material with a particle diameter greater than that of the second dry electrode active material. The second dry electrode active material may be, for example, a small-diameter dry electrode active material having a particle diameter smaller than that of the first dry electrode active material. For example, in one or more embodiments, the first dry electrode active material may be a large-diameter dry electrode active material, and the second dry electrode active material may be a small-diameter dry electrode active material. For example, the second dry electrode active material having a smaller average particle diameter than that of the first dry electrode active material may be arranged in pores between the particles of the first dry electrode active material. By arranging particles of the second dry electrode active material having a small-diameter in the pores between the particles of the first dry electrode active material having a large-diameter, both (e.g., simultaneously) ionic conductivity and electronic conductivity of a dry electrode including the dry electrode active material may be improved. In some embodiments, the dry electrode including the dry electrode active material may have a higher energy density. As a result, a lithium battery including the dry electrode active material may have a higher energy density and improved cycle characteristics.

For example, in one or more embodiments, the first dry electrode active material and the second dry electrode active material may have a bimodal particle diameter distribution in a particle diameter distribution chart. For example, in one or more embodiments, a composite positive active material (e.g., a dry electrode active material) may have a bimodal particle diameter distribution with two peaks in a particle diameter distribution chart obtained by utilizing a particle size analyzer (PSA) and/or the like. The bimodal particle diameter distribution may have a first peak corresponding to the first dry electrode active material and a second peak corresponding to the second dry electrode active material.

A particle diameter ratio of the first dry electrode active material to the second dry electrode active material may be, for example, from 3:1 to 40:1, from 3:1 to 30:1, from 3:1 to 20:1, from 3:1 to 10:1, or from 3:1 to 5:1. Because the particle diameter ratio of the first dry electrode active material to the second dry electrode active material is within the ranges above, a lithium battery including the composite positive active material may have a higher energy density and improved cycle characteristics.

In one or more embodiments, the particle diameter of the first dry electrode active material may be, for example, greater than 8 $\mu$m and up to 30 $\mu$m, from 9 $\mu$m to 25 $\mu$m, from 9 $\mu$m to 20 $\mu$m, from 9 $\mu$m to 15 $\mu$m, or from 9 $\mu$m to 12 $\mu$m. The particle diameter of the first dry electrode active material may be, for example, a median particle diameter (D50). The particle diameter of the second dry electrode active material may be, for example, at least 1 $\mu$m and less than 8 $\mu$m, from 1 $\mu$m to 7 $\mu$m, from 1 $\mu$m to 6 $\mu$m, from 1 $\mu$m to 5 $\mu$m, or from 1 $\mu$m to 4 $\mu$m. The particle diameter of the second dry electrode active material may be, for example, a median particle diameter (D50). Because the first dry electrode active material and the second dry electrode active material have the average particle diameters within the ranges described above, energy density and/or cycle characteristics of a lithium battery including the composite positive active material may further be improved. The particle diameters of the first dry electrode active material and the second dry electrode active material may be measured by a measurement apparatus utilizing a laser diffraction method or a dynamic light scattering method. In some embodiments, the particle diameters are measured by utilizing, for example, a laser scattering particle size distribution analyzer (e.g., LA-920 from Horiba Instruments, Inc.), and may be a value of median particle diameter (D50) at 50 % of a total cumulative particle diameter distribution of particles from the smallest particle diameter to the largest particle diameter. In some embodiments, the particle diameters of the first dry electrode active material and the second dry electrode active material may be measured from a scanning electron microscope (SEM) image or utilizing an optical microscope.

A weight ratio of the first dry electrode active material to the second dry electrode active material may be, for example, from 90:10 to 60:40, from 85:15 to 65:35, from 80:20 to 65:35, or from 75:25 to 65:35. With the weight ratio of the first dry electrode active material to the second dry electrode active material within the ranges described above, energy density and/or cycle characteristics of a lithium battery including the composite positive active material may further be improved.

The dry electrode film may include the dry binder. The dry binder may be, for example, a binder that is not impregnated with, dissolved in, or dispersed in a processing solvent during a process of manufacturing the dry electrode film. The dry binder may be, for example, a binder that does not include a processing solvent or may not be in contact with a processing solvent during a process of manufacturing the dry electrode film. In some embodiments, the dry binder may be, for example, a fibrillized binder or a fibrous binder. The fibrillized binder or fibrous binder may serve as a matrix that supports and binds the electrode active material and other components included in an electrode active material layer. It may be confirmed that the fibrillized binder or fibrous binder has a fibrous form based on an SEM image of a cross-section thereof. The fibrillized binder or fibrous binder has an aspect ratio of, for example, 10 or more, 20 or more, 50 or more, or 100 or more.

Examples of the dry binder may include polytetrafluoroethylene (PTFE), a polyvinylidene fluoride-hexafluoropropylene (PVDF-HFP) copolymer, polyvinylidene fluoride (PVDF), polyvinyl alcohol, polyacrylonitrile, carboxymethylcellulose (CMC), starch, hydroxypropylcellulose, cellulose, polyvinylpyrrolidone, polyethylene, polypropylene, ethylene-propylene-diene polymer (EPDM), sulfonated-EPDM, styrene butadiene rubber (SBR), fluororubber, and/or a copolymer thereof, but embodiments of the present disclosure are not limited thereto, and any binders utilized in the manufacture of dry electrodes may also be utilized. For example, in some embodiments, the dry binder may include a fluorine-based binder. The fluorine-based binder may be, for example, polytetrafluoroethylene (PTFE), a polyvinylidene fluoride-hexafluoropropylene (PVDF-HFP) copolymer, and/or polyvinylidene fluoride (PVDF).

In one or more embodiments, the dry binder may have a glass transition temperature ($T_g$) of, for example, -30 °C to 150 °C, 15 °C to 150 °C, 15 °C to 130 °C, 50 °C to 130 °C, 100 °C to 130 °C, or 120 °C to 130 °C. In some embodiments, the dry binder may have a glass transition temperature ($T_g$) of, for example, -30 °C to 150 °C, - 30 °C to 100 °C, -30 °C to 50 °C, -30 °C to 15 °C, -30 °C to -10 °C, or -30 °C to -20 °C. The glass transition temperature of polytetrafluoroethylene (PTFE) is, for example, from 120 °C to 130 °C. Because the dry binder has the glass transition temperature within the ranges described above, the fibrillized binder or fibrous binder may be more easily obtained during the process of manufacturing the dry electrode.

An amount of the dry binder is, for example, from 0.1 wt% to 5 wt%, 0.5 wt% to 5 wt%, or 1 wt% to 5 wt%, based on a total weight of the dry electrode film. Because the amount of the dry binder included in the dry electrode film is within the ranges above, binding force of the dry electrode film may be improved, and high energy density of the dry electrode film may be maintained.

In one or more embodiments, the dry electrode film may further include, for example, a conductive material. The conductive material may be, for example, a dry conductive material. The dry conductive material may be, for example, a conductive material that is not impregnated with, dissolved in, or dispersed in a processing solvent during a process of manufacturing the dry electrode film. The dry conductive material may be, for example, a conductive material that does not include a processing solvent or may not be in contact with a processing solvent during a process of manufacturing the dry electrode film. In some embodiments, the dry conductive material may include, for example, a carbonaceous conductive material. The carbonaceous conductive material may include, for example, a fibrous carbonaceous material having an aspect ratio of 10 or more, a particulate carbonaceous material having an aspect ratio less than 10, or a combination thereof.

The fibrous carbonaceous material having an aspect ratio of 10 or more may be, for example, carbon fibers, carbon nanotubes, and/or carbon nanobelts, but embodiments of the present disclosure are not limited thereto, and any materials available as the carbonaceous conductive material in the art may also be utilized. In one or more embodiments, the fibrous carbonaceous material having an aspect ratio of 10 or more may include at least one of the above-described second carbonaceous materials. The fibrous carbonaceous conductive material is distinguished from the second carbonaceous material constituting the dry electrode active material in terms of being simply mixed with the dry electrode active material.

Examples of the particulate carbonaceous material having an aspect ratio less than 10 may include carbon black, acetylene black, Ketjen black, natural graphite, and/or artificial graphite, but embodiments of the present disclosure are not limited thereto, and any carbonaceous conductive materials commonly available in the art may also be utilized. The aspect ratio of the particulate carbonaceous material is, for example, from 1 to 7, from 1 to 5, from 1 to 3, or from 1 to 2.

An amount of the dry conductive material included in the dry electrode film may be, for example, from 0.1 wt% to 5 wt%, from 0.5 wt% to 5 wt%, or from 1 wt% to 5 wt%, based on a total weight of the dry electrode film. Because the amount of the dry conductive material included in the dry electrode film is within the ranges described above, the dry electrode film may have improved conductivity and a lithium battery including the dry electrode film may have improved cycle characteristics.

In one or more embodiments, the dry electrode film may be, for example, a self-standing film. For example, the dry electrode film may have a film shape without utilizing a support. Thus, the dry electrode film may be disposed on an electrode current collector after being prepared as a separate self-standing film. The dry electrode film prepared by a dry method does not include an intentionally added processing solvent. For example, the dry electrode film does not include a residual processing solvent. Although a trace amount of an unintended solvent may remain in the dry electrode film, the solvent is not a processing solvent intentionally added thereto. Therefore, the dry electrode film is distinguished from a wet electrode film that is prepared by mixing components with a processing solvent, drying the mixture, and removing the processing solvent in whole or in part.

In one or more embodiments, the dry electrode film may have a tensile strength of, for example, 500 kPa or more, 700 kPa or more, or 1000 kPa or more at 25 °C. in some embodiments, the dry electrode film may have a tensile strength of, for example, 500 kPa to 5000 kPa, 700 kPa to 5000 kPa, or 1000 kPa to 5000 kPa at 25 °C. With the tensile strength within the ranges described above, structural stability of the dry electrode film may be improved. Therefore, reversibility of electrode reaction may be improved because a three-dimensional conductive network of the dry electrode film is maintained during a charging and discharging process. Due to such a high tensile strength of the dry electrode film, mechanical strength of the dry electrode film may be improved. Due to the improved mechanical strength of the dry electrode film, local deterioration caused by a volume change of an electrode including the dry electrode film and a lithium battery including the same may be inhibited during charging and discharging. As a result, cycle characteristics of the lithium battery may be improved.

According to one or more embodiments of the present disclosure, a dry electrode may include an electrode current collector, and the above-described dry electrode film disposed on one side or both (e.g., opposite) sides of the electrode current collector (e.g., on at least one side of the electrode current collector).

By including the dry electrode film, the dry electrode has reduced internal resistance and improved mechanical properties.

The electrode current collector may include, for example, a substrate.

A material constituting the substrate may be any material that does not react with lithium, i.e., any conductive material that does not form an alloy or compound with lithium. The substrate may be formed of, for example, a metal or an alloy. In one or more embodiments, the substrate may be formed of, for example, indium (In), copper (Cu), magnesium (Mg), stainless steel, titanium (Ti), iron (Fe), cobalt (Co), nickel (Ni), zinc (Zn), aluminum (Al), germanium (Ge), or an alloy thereof. For example, in one or more embodiments, the substrate may be in a form selected from foil, film, plate, porous structure, mesoporous structure, through-hole-containing structure, polygonal ring, mesh, foam, and non-woven structure, but embodiments of the present disclosure are not limited thereto, and the substrate may be in any form commonly available in the art.

In one or more embodiments, the electrode current collector may include, for example, a substrate, and an interlayer between the substrate and the dry electrode film. The interlayer may include, for example, a carbonaceous conductive material.

For example, in some embodiments, the interlayer may be directly disposed on one side or both (e.g., opposite) sides of the substrate. Therefore, another layer may not be disposed between the substrate and the interlayer. By directly disposing the interlayer on one side or both (e.g., opposite) sides of the substrate, binding force between the substrate and the dry electrode film may further be improved.

A thickness of the interlayer may be, for example, from 0.01 % to 30 %, from 0.1 % to 30 %, from 0.5 % to 30 %, from 1 % to 25 %, from 1 to 20 %, from 1 % to 15 %, from 1 % to 10 %, from 1 % to 5 %, or from 1 to 3 % of a thickness of the substrate. In some embodiments, the thickness of the interlayer may be, for example, from 10 nm to 5 $\mu$m, from 50 nm to 5 $\mu$m, from 200 nm to 4 $\mu$m, from 500 nm to 3 $\mu$m, from 500 nm to 2 $\mu$m, from 500 nm to 1.5 $\mu$m, or from 700 nm to 1.3 $\mu$m. With the thickness of the interlayer within the above-described ranges, binding force between the substrate and the dry electrode film is further improved and an increase in interfacial resistance is inhibited.

The interlayer includes, for example, a carbonaceous conductive material. The carbonaceous conductive material contained in the interlayer may be selected from carbonaceous conductive materials utilized in the dry electrode film. The interlayer may include the same carbonaceous conductive material as that utilized in the dry electrode film. Because the interlayer includes the carbonaceous conductive material, the interlayer may be, for example, a conductive layer.

In one or more embodiments, the interlayer may further include, for example, a binder. Because the interlayer further includes the binder, binding force between the substrate and the dry electrode film may further be improved. The binder included in the interlayer may be, for example, a conductive binder and/or a non-conductive binder. The conductive binder may be, for example, an ion-conductive binder and/or an electron-conductive binder. A binder having both (e.g., simultaneously) ionic conductivity and electronic conductivity may belong to the ion-conductive binder and the electron-conductive binder.

In one or more embodiments, the binder included in the interlayer may be selected from the binders utilized in the dry electrode film. In some embodiments, the interlayer may include the same binder as that utilized in the dry electrode film. The binder included in the interlayer may be, for example, a fluorine-based binder. The fluorine-based binder included in the interlayer, may be, for example, polyvinylidenefluoride (PVDF). In some embodiments, the interlayer may be, for example, an adhesive layer including the binder. In some embodiments, the interlayer may be a conductive layer including, for example, the binder and the carbonaceous conductive material.

The interlayer may be disposed on the substrate by, for example, a dry or wet method. In some embodiments, the interlayer may be disposed on the substrate by a dry method such as chemical vapor deposition (CVD) or physical vapor deposition (PVD). In some embodiments, the interlayer may be disposed on the substrate by a wet method such as spin coating or dip coating. The interlayer may be disposed on the substrate by depositing the carbonaceous conductive material on the substrate. The dry-coated interlayer is formed of a carbonaceous conductive material and may not include (e.g., may exclude) any binder. In some embodiments, for example, the interlayer may be disposed on the substrate by coating a composition including a carbonaceous conductive material, a binder, and a solvent on the surface of the substrate and drying the coated composition. The interlayer may have a single-layer or multi-layer structure. The multi-layer structure may be a double-layer structure, a triple-layer structure, or a quadruple-layer structure.

In one or more embodiments, the electrode current collector may include, for example, a base film and a metal layer on (e.g., dispose on) one side or both (e.g., opposite) sides of the base film. In some embodiments, the electrode current collector may include a substrate, and the substrate may have a structure including a base film and a metal layer on (e.g., disposed on) one side or both (e.g., opposite) sides of the base film. The base film may include, for example, a polymer. The polymer may be, for example, a thermoplastic polymer. The polymer may include, for example, polyethyleneterephthalate (PET), polyethylene (PE), polypropylene (PP), polybutyleneterephthalate (PBT), polyimide (PI), or combinations thereof. Because the base film includes the thermoplastic polymer, the base film melts in the case of occurrence of a short circuit, so that a rapid current increase may be inhibited. In some embodiments, the base film may be, for example, an insulator. The metal layer may include, for example, copper (Cu), stainless steel, titanium (Ti), iron (Fe), cobalt (Co), nickel (Ni), or an alloy thereof. The metal layer acts as an electrochemical fuse and is cut by an overcurrent, thereby preventing or reducing a short circuit. By controlling a thickness of the metal layer, a limiting current and a maximum current may be adjusted. The metal layer may be plated or deposited on the base film. As the thickness of the metal layer decreases, the limiting current and/or maximum current of the electrode current collector decrease, so that stability of the lithium battery may be improved in the case of occurrence of a short circuit. In some embodiments, a lead tab may be added onto the metal layer for connection with the outside. The lead tab may be welded to the metal layer or a metal layer/base film stack structure by ultrasonic welding, laser welding, spot welding, and/or the like. While the base film and/or the metal layer melts during welding, the metal layer may be electrically connected to the lead tab. In some embodiments, a metal chip may further be added between the metal layer and the lead tab for stronger welding between the metal layer and the lead tab. The metal chip may be a chip of the same material as the metal of the metal layer. The metal chip may be, for example, metal foil and metal mesh. The metal chip may be, for example, aluminum foil, copper foil, and SUS foil. By disposing the metal chip on the metal layer and performing welding, the lead tab may be welded to a metal chip/metal layer stack structure or a metal chip/metal layer/base film stack structure. While the base film, the metal layer, and/or the metal chip melt during welding, the metal layer or the metal layer/metal chip stack structure may be electrically connected to the lead tab. In some embodiments, a metal chip and/or a lead tab may further be added to a portion of the metal layer. In one or more embodiments, the base film may have a thickness of, for example, 1 $\mu$m to 50 $\mu$m, 1.5 $\mu$m to 50 $\mu$m, 1.5 $\mu$m to 40 $\mu$m, or 1 to 30 $\mu$m. With the thickness of the base film within the above-described ranges, the weight of the electrode assembly may be more effectively reduced. A melting point of the base film may be, for example, from 100 °C to 300 °C, from 100 °C to 250 °C, or from 100 °C to 200 °C. Because the base film has a melting point within the above-described ranges, the base film melts during a process of welding the lead tab to be easily bound to the lead tab. In some embodiments, to improve adhesion between the base film and the metal layer, surface treatment such as corona treatment may be performed on the base film. In one or more embodiments, a thickness of the metal layer may be, for example, from 0.01 $\mu$m to 3 $\mu$m, from 0.1 $\mu$m to 3 $\mu$m, from 0.1 $\mu$m to 2 $\mu$m, or from 0.1 $\mu$m to 1 $\mu$m. With the thickness of the metal layer within the above-described ranges, stability of the electrode assembly may be obtained while maintaining conductivity thereof. In one or more embodiments, a thickness of the metal chip may be, for example, from 2 $\mu$m to 10 $\mu$m, from 2 $\mu$m to 7 $\mu$m, or from 4 $\mu$m to 6 $\mu$m. With the thickness of the metal chip within the above-described ranges, the metal layer may be more easily connected to the lead tab. Because the electrode current collector has the above-described structure, the weight of the electrode may be reduced, so that energy density of the lithium battery may be increased. The electrode current collector may be, for example, a positive electrode current collector. The electrode current collector may be, for example, a negative electrode current collector.

The dry electrode film included in the dry electrode corresponds to an electrode active material layer.

In embodiments in which the electrode active material layer (i.e., dry electrode film) of the dry electrode is measured by utilizing a surface and interfacial cutting analysis system (SAICAS), a vertical relative force ($F_{VR}$) change rate with respect to a depth between a first point 5 % away from a surface of the electrode active material in a direction toward the electrode current collector and a second point 5 % away from a surface of the electrode current collector relative to a total thickness of the electrode active material is, for example, 300 % or less. In some embodiments, the vertical relative force change rate may be, for example, from 10 % to 300 %, from 10 % to 250 %, from 10 % to 200 %, from 10 % to 150 %, or from 10 % to 100 %. The second point, which is 5 % away from the surface of the electrode current collector in a direction toward the electrode active material layer corresponds to a point 95 % away from the surface of the electrode active material layer in a direction toward the electrode current collector relative to the total thickness of the electrode active material layer. The vertical relative force is calculated by Equation 1. A measurement method utilizing the SAICAS is described in Evaluation Example 11.

## Equation 1

$$\text{Vertical relative force } (F_V) \text{ change rate} = [(\text{maximum value of vertical relative force } (F_{VR1}) - \text{minimum value of vertical relative force } (F_{VR1})) / \text{minimum value of vertical relative force } (F_{VR1})] \times 100$$

Because the vertical relative force change rate is 300 % or less in embodiments in which the electrode active material layer of the dry electrode is measured by the SAICAS, uniformity of distribution of components in the electrode may be improved. Also, because side reactions and an increase in internal resistance caused by non-substantially uniform distribution of components of the electrode active material layer are inhibited, reversibility of electrode reaction may be improved. In embodiments of an electrode having a high loading, cycle characteristics of the lithium battery may be improved.

In embodiments in which the electrode active material layer of the dry electrode is measured by utilizing a SAICAS, a horizontal force ratio of a second horizontal force ($F_{H2}$) at a second point, which is 10% away from a surface of the electrode current collector in a direction toward the electrode active material layer (e.g., in a depth direction), to a first horizontal force ($F_{H1}$) at a first point, which is 10 % away from a surface of the electrode active material layer in a direction toward the electrode current collector relative to a total thickness from of the electrode active material layer to the electrode current collector may be, for example, 50 % or more. In some embodiments, the horizontal force ratio may be, for example, from 50 % to 100 %, from 60 % to 100 %, from 70 % to 100 %, from 80 % to 100 %, or from 90 % to 100 %. The second point, which is 10 % away from the surface of the electrode current collector in a direction toward the electrode active material layer corresponds to a point 90 % away from the surface of the electrode active material layer in a direction toward the electrode current collector relative to the total thickness of the electrode active material layer. The horizontal force ratio is represented by, for example, Equation 2. A measurement method utilizing the SAICAS is described in Evaluation Example 12.

## Equation 2

$$\text{Horizontal force ratio} = [\text{second horizontal force } (F_{H2})/\text{first horizontal force } (F_{H1})] \times 100$$

Because the horizontal force is 50 % or more in embodiments in which the electrode active material layer of the dry electrode is measured utilizing the SAICAS, uniformity of distribution of components in the electrode may further be improved. Because the dry electrode has the horizontal force within the range described above, cycle characteristics of a lithium battery including the dry electrode may further be improved.

In one or more embodiments, the dry electrode may be, for example, a dry positive electrode. The dry positive electrode may include a dry positive electrode film, and the dry positive electrode film may include a dry positive active material having the above-described core/shell structure.

The dry positive active material having the above-described core/shell structure may include the lithium transition metal oxide in the core and the first metal oxide and the first carbonaceous material in the shell.

In one or more embodiments, the dry positive active material may further include suitable common dry positive active materials in addition to the dry positive active material including the above-described core/shell structure. Any suitable dry positive active materials commonly available in the art may be utilized without limitation.

For example, in one or more embodiments, the dry positive active material may include at least one composite oxide of lithium and a metal selected from cobalt, manganese, nickel, and a combination thereof, and non-limiting examples thereof may be a compound represented by one selected from the following formulae: $Li_aA_{1-b}B'_bD_2$ (where $0.90 \le a \le 1$ and $0 \le b \le 0.5$); $Li_aE_{1-b}B'_bO_{2-c}D_c$ (where $0.90 \le a \le 1$, $0 \le b \le 0.5$, and $0 \le c \le 0.05$); $LiE_{2-b}B'_bO_{4-c}D_c$ (where $0 \le b \le 0.5$ and $0 \le c \le 0.05$); $Li_aNi_{1-b-c}Co_bB'_cD_\alpha$ (where $0.90 \le a \le 1$, $0 \le b \le 0.5$, $0 \le c \le 0.05$, and $0 < \alpha \le 2$); $Li_aNi_{1-b-c}Co_bB'_cO_{2-\alpha}F'_\alpha$ (where $0.90 \le a \le 1$, $0 \le b \le 0.5$, $0 \le c \le 0.05$, and $0 < \alpha < 2$); $Li_aNi_{1-b-c}Co_bB'_cO_{2-\alpha}F'_2$ (where $0.90 \le a \le 1$, $0 \le b \le 0.5$, $0 \le c \le 0.05$, and $0 < \alpha < 2$); $Li_aNi_{1-b-c}Mn_bB'_cD_\alpha$ (where $0.90 \le a \le 1$, $0 \le b \le 0.5$, $0 \le c \le 0.05$, and $0 < \alpha \le 2$); $Li_aNi_{1-b-c}Mn_bB'_cO_{2-\alpha}F'_\alpha$ (where $0.90 \le a \le 1$, $0 \le b \le 0.5$, $0 \le c \le 0.05$, and $0 < \alpha < 2$); $Li_aNi_{1-b-c}Mn_bB'_cO_{2-\alpha}F'_2$ (where $0.90 \le a \le 1$, $0 \le b \le 0.5$, $0 \le c \le 0.05$, and $0 < \alpha < 2$); $Li_aNi_bE_cG_dO_2$ (where $0.90 \le a \le 1$, $0 \le b \le 0.9$, $0 \le c \le 0.5$, and $0.001 \le d \le 0.1$); $Li_aNi_bCo_cMn_dG_eO_2$ (where $0.90 \le a \le 1$, $0 \le b \le 0.9$, $0 \le c \le 0.5$, $0 \le d \le 0.5$, and $0.001 \le e \le 0.1$); $Li_aNiG_bO_2$ (where $0.90 \le a \le 1$ and $0.001 \le b \le 0.1$); $Li_aCoG_bO_2$ (where $0.90 \le a \le 1$ and $0.001 \le b \le 0.1$); $Li_aMnG_bO_2$ (where $0.90 \le a \le 1$ and $0.001 \le b \le 0.1$); $Li_aMn_2G_bO_4$ (where $0.90 \le a \le 1$ and $0.001 \le b \le 0.1$); $QO_2$; $QS_2$; $LiQS_2$; $V_2O_5$; $LiV_2O_5$; $LiI'O_2$; $LiNiVO_4$; $Li_{(3-f)}J_2(PO_4)_3$ (where $0 \le f \le 2$); $Li_{(3-f)}Fe_2(PO_4)_3$ (where $0 \le f \le 2$); and $LiFePO_4$.

In the formulae representing compounds above, A may be Ni, Co, Mn, or a combination thereof; B' may be Al, Ni, Co, Mn, Cr, Fe, Mg, Sr, V, a rare earth element, or a combination thereof; D may be O, F, S, P, or a combination thereof; E is Co, Mn, or a combination thereof; F' may be F, S, P, or a combination thereof; G may be Al, Cr, Mn, Fe, Mg, La, Ce, Sr, V, or a combination thereof; Q may be Ti, Mo, Mn, or a combination thereof; I' may be Cr, V, Fe, Sc, Y, or a combination thereof; and J may be V, Cr, Mn, Co, Ni, Cu, or a combination thereof.

In one or more embodiments, the above-described compound having a coating layer on the surface thereof may be utilized or a mixture of the above-described compound and a compound having a coating layer may also be utilized. The coating layer added to the surface of the compound may include, for example, a compound of a coating element such as an oxide, hydroxide, oxyhydroxide, oxycarbonate, or hydroxycarbonate of the coating element. The compound constituting the coating layer may be amorphous or crystalline. The coating element included in the coating layer may be Mg, Al, Co, K, Na, Ca, Si, Ti, V, Sn, Ge, Ga, B, As, Zr or any mixture thereof. A method of forming the coating layer may be selected from those not adversely affect physical properties of the positive active material. The coating methods may be, for example, spray coating and dip coating. These coating methods are obvious to those of ordinary skill in the art, and thus detailed descriptions thereof will not be given.

In one or more embodiments, the dry electrode may be, for example, a dry negative electrode. The dry negative electrode may include a dry negative electrode film, and the dry negative electrode film may include a dry negative active material.

The dry negative active material may be any negative active materials of lithium batteries commonly utilized in the art. For example, at least one selected from lithium metal, a metal alloyable with lithium, a transition metal oxide, a non-transition metal oxide, and a carbonaceous material may be included. For example, the metal alloyable with lithium may be silicon (Si), tin (Sn), aluminum (Al), germanium (Ge), lead (Pb), bismuth (Bi), antimony (Sb), an Si-X alloy (where X is an alkali metal, an alkali earth metal, a Group 13 element, a Group 14 element, a transition metal, a rare earth element, or a combination thereof, except for Si), an Sn-X alloy (where X is an alkali metal, an alkali earth metal, a Group 13 element, a Group 14 element, a transition metal, a rare earth element, or a combination thereof, except for Sn), and/or the like. The element X may be, for example, magnesium (Mg), calcium (Ca), strontium (Sr), barium (Ba), radium (Ra), scandium (Sc), yttrium (Y), titanium (Ti), zirconium (Zr), hafnium (Hf), rutherfordium (Rf), vanadium (V), niobium (Nb), tantalum (Ta), dubnium (Db), chromium (Cr), molybdenum (Mo), tungsten (W), seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), aluminum (Al), gallium (Ga), tin (Sn), indium (In), titanium (Ti), germanium (Ge), phosphorus (P), arsenic (As), antimony (Sb), bismuth (Bi), sulfur (S), selenium (Se), tellurium (Te), polonium (Po), or a combination thereof. For example, the transition metal oxide may be lithium titanium oxide, vanadium oxide, lithium vanadium oxide, and/or the like. The non-transition metal oxide may be, for example, $SnO_2$ and $SiO_x$ (where $0<x<2$). The carbonaceous material may be, for example, crystalline carbon, amorphous carbon, or any mixture thereof. The crystalline carbon may be, for example, graphite such as natural graphite or artificial graphite in amorphous, plate-like, flake, spherical (e.g., substantially spherical) or fibrous form. The amorphous carbon may be, for example, soft carbon (carbon calcined at low temperature) or hard carbon, mesophase pitch, carbide, and/or calcined coke.

According to one or more embodiments, a lithium battery may include a first electrode, a second electrode, and an electrolyte between the first electrode and the second electrode, wherein the first electrode, the second electrode, or a combination thereof is the above-described dry electrode.

Because the lithium battery includes the dry electrode having reduced internal resistance and improved mechanical properties, cycle characteristics of the lithium battery are improved.

In one or more embodiments, the lithium battery may include, for example, a dry positive electrode, a dry negative electrode, or both (e.g., simultaneously) the dry positive electrode and the dry negative electrode. In some embodiments, the lithium battery may include, for example, a dry positive electrode and a wet negative electrode, or a wet positive electrode and a dry negative electrode.

In one or more embodiments, the lithium battery may include an electrolyte, and the electrolyte may be, for example, a liquid electrolyte, a solid electrolyte, a gel electrolyte, or a combination thereof.

The liquid electrolyte may be, for example, an organic electrolytic solution. The organic electrolytic solution may be prepared, for example, by dissolving a lithium salt in an organic solvent.

Any organic solvents commonly utilized in the art may be utilized. Non-limiting examples of the organic solvent may include propylene carbonate, ethylene carbonate, fluoroethylene carbonate, butylene carbonate, dimethyl carbonate, diethyl carbonate, methylethyl carbonate, methylpropyl carbonate, ethylpropyl carbonate, methylisopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N,N-dimethyl formamide, dimethyl acetamide, dimethylsulfoxide, dioxane, 1,2-dimethoxyethane, sulfolane, dichloroethane, chlorobenzene, nitrobenzene, diethylene glycol, dimethyl ether, or any mixture thereof.

The lithium salt may be any lithium salt commonly utilized in the art. For example, in some embodiments, the lithium salt may be $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (where x and y are natural numbers), LiCl, LiI, or any mixture thereof.

The solid electrolyte may include, for example, an inorganic solid electrolyte, an organic solid electrolyte, an organic-inorganic composite solid electrolyte, or a combination thereof.

The solid electrolyte may include, for example, an oxide-based solid electrolyte, a sulfide-based solid electrolyte, a polymer solid electrolyte, or a combination thereof.

For example, in some embodiments, the solid electrolyte may be boron oxide, lithium oxynitride, and/or the like. However, the solid electrolyte is not limited thereto and any suitable solid electrolyte may be utilized. The solid electrolyte may be formed on the negative electrode by sputtering, and/or the like or a separate solid electrolyte sheet may be laminated on the negative electrode.

Non-limiting examples of the oxide-based solid electrolyte may include $Li_{1+x+y}Al_xTi_{2-x}Si_yP_{3-y}O_{12}$ (where $0<x<2$ and $0\leq y<3$), $BaTiO_3$, $Pb(Zr,Ti)O_3$ (PZT), $Pb_{1-x}La_xZr_{1-y}Ti_yO_3$ (PLZT, where $0\leq x<1$ and $0\leq y<1$), $Pb(Mg_3Nb_{2/3})O_3-PbTiO_3$ (PMN-PT), $HfO_2$, $SrTiO_3$, $SnO_2$, $CeO_2$, $Na_2O$, $MgO$, $NiO$, $CaO$, $BaO$, $ZnO$, $ZrO_2$, $Y_2O_3$, $Al_2O_3$, $TiO_2$, $SiO_2$, $Li_3PO_4$, $Li_xTi_y(PO_4)_3$ (where $0<x<2$ and $0<y<3$), $Li_xAl_yTi_z(PO_4)_3$ (where $0<x<2$, $0<y<1$, and $0<z<3$), $Li_{1+x+y}(Al, Ga)_x(Ti,$

Ge)$_{2-x}$Si$_y$P$_{3-y}$O$_{12}$ (where 0≤x≤1 and 0≤y≤1), Li$_x$La$_y$TiO$_3$ (where 0<x<2 and 0<y<3), Li$_2$O, LiOH, Li$_2$CO$_3$, LiAlO$_2$, Li$_2$O-Al$_2$O$_3$-SiO$_2$-P$_2$O$_5$-TiO$_2$-GeO$_2$, Li$_{3+x}$La$_3$M$_2$O$_{12}$ (where M = Te, Nb, or Zr, and, 0≤x≤10), Li$_{3+x}$La$_3$Zr$_{2-y}$M$_y$O$_{12}$ (M doped LLZO, M=Ga, W, Nb, Ta, Al, or a combination thereof, 0≤x≤10, and 0<y<2), Li$_7$La$_3$Zr$_{2-x}$Ta$_x$O$_{12}$ (where 0<x<2, LLZ-Ta), or a combination thereof. In some embodiments, the oxide-based solid electrolyte may be, for example, a garnet-type or kind solid electrolyte. The oxide-based solid electrolyte may be manufactured by a sintering method, and/or the like.

In some embodiments, the oxide-based solid electrolyte may include, for example, Li$_7$La$_3$Zr$_2$O$_{12}$ (LLZO), Li$_{6.5}$La$_3$Zr$_{1.5}$Ta$_{0.5}$O$_{12}$, Li$_{1.3}$Al$_{0.3}$Ti$_{1.7}$(PO$_4$)$_3$, Li$_{0.34}$La$_{0.51}$TiO$_{2.94}$, Li$_{l107}$AL$_{0.69}$Ti$_{1.46}$(PO$_4$)$_3$, 50Li$_4$SiO$_4$-50Li$_2$BO$_3$, 90Li$_3$BO$_3$-10Li$_2$SO$_4$, Li$_{2.9}$PO$_{3.3}$N$_{0.46}$, or a combination thereof.

The sulfide-based solid electrolyte may include, for example, at least one selected from Li$_2$S-P$_2$S$_5$, Li$_2$S-P$_2$S$_5$-LiX (where X is a halogen), Li$_2$S-P$_2$S$_5$-Li$_2$O, Li$_2$S-P$_2$S$_5$-Li$_2$O-LiI, Li$_2$S-SiS$_2$, Li$_2$S-SiS$_2$-LiI, Li$_2$S-SiS$_2$-LiBr, Li$_2$S-SiS$_2$-LiCl, Li$_2$S-SiS$_2$-B$_2$S$_3$-LiI, Li$_2$S-SiS$_2$-P$_2$S$_5$-LiI, Li$_2$S-B$_2$S$_3$, Li$_2$S-P$_2$S$_5$-Z$_m$S$_n$ (where m and n are positive numbers, and Z is Ge, Zn, or Ga), Li$_2$S-GeS$_2$, Li$_2$S-SiS$_2$-Li$_3$PO$_4$, Li$_2$S-SiS$_2$-LipMO$_q$ (where p and q are positive numbers and M is P, Si, Ge, B, Al, Ga, or In), Li$_{7-x}$PS$_{6-x}$Cl$_x$ (where 0≤x≤2), Li$_{7-x}$PS$_{6-x}$Br$_x$ (where 0≤x≤2), and Li$_{7-x}$PS$_{6-x}$I$_x$ (where 0≤x≤2). The sulfide-based solid electrolyte may be prepared by treating a starting material such as Li$_2$S and P$_2$S$_5$ by melt quenching or mechanical milling. In some embodiments, heat treatment may be performed after such treatment. The sulfide-based solid electrolyte may be in an amorphous or crystalline form or in a mixed form thereof.

In one or more embodiments, the sulfide-based solid electrolyte may include, for example, an argyrodite type or kind solid electrolyte represented by Formula 9.

**Formula 9**          Li$^+_{12-n-x}$A$^{n+}$X$^{2-}_{6-x}$Y$^-_x$

In Formula 9, A may be P, As, Ge, Ga, Sb, Si, Sn, Al, In, Ti, V, Nb, or Ta, X may be S, Se, or Te, and Y may be Cl, Br, I, F, CN, OCN, SCN, or N$_3$, where 1≤n≤5 and 0≤x≤2.

In some embodiments, the sulfide-based solid electrolyte may be an argyrodite-type or kind compound including at least one selected from Li$_{7-x}$PS$_{6-x}$Cl$_x$ (where 0≤x≤2), Li$_{7-x}$PS$_{6-x}$Br$_x$ (where 0≤x≤2), and Li$_{7-x}$PS$_{6-x}$I$_x$ (where 0≤x≤2). In some embodiments, the sulfide-based solid electrolyte contained in the solid electrolyte may be an argyrodite-type or kind compound including at least one selected from Li$_6$PS$_5$Cl, Li$_6$PS$_5$Br, and LisPSsl.

The polymer solid electrolyte may include, for example, a solid electrolyte including an ion-conductive polymer and a lithium salt, a solid electrolyte including an ionic liquid polymer and a lithium salt, or a combination thereof.

The ion-conductive polymer may be a polymer including an ion-conductive repeating unit at a main chain or a side chain. The ionic conductivity repeating unit, as a unit having ionic conductivity, may be, for example, an alkylene oxide unit or a hydrophilic unit. In some embodiments, the ion-conductive polymer may include, for example, an ether monomer (e.g., an ether unit), an acrylate monomer (e.g., an acrylate unit), a methacrylate monomer (e.g., a methacrylate unit), a siloxane monomer (e.g., a siloxane unit), or a combination thereof, as an ion-conductive repeating unit. In some embodiments, the ion-conductive polymer may be, for example, polyethylene oxide, polypropylene oxide, polymethyl methacrylate, polyethyl methacrylate, polydimethylsiloxane, polyacrylic acid, polymethacrylic acid, polymethyl acrylate, polyethyl acrylate, poly2-ethylhexyl acrylate, polybutyl methacrylate, poly 2-ethylhexyl methacrylate, polydecyl acrylate, polyethylene vinyl acetate, or a combination thereof. In some embodiments, the ion-conductive polymer may be, for example, polyethylene oxide (PEO), polyvinyl alcohol (PVA), polyvinyl pyrrolidone (PVP), polyvinylsulfone, or a combination thereof.

A polymeric ionic liquid (PIL) may include, for example, a repeating unit containing i) at least one cation selected from ammonium, pyrolidium, pyridinium, pyrimidium, imidazolium, piperidinium, pyrazolium, oxazolium, pyridazinium, phosphonium, sulfonium, triazole, and any mixture thereof, and ii) at least one anion selected from BF$_4^-$, PF$_6^-$, AsF$_6^-$, SbF$_6^-$, AlCla$^-$, HSO$_4^-$, ClO$_4^-$, CH$_3$SO$_3^-$, CF$_3$CO$_2^-$, (CF$_3$SO$_2$)$_2$N$^-$, Cl$^-$, Br$^-$, I$^-$, SO$_4^-$, CF$_3$SO$_3^-$, (C$_2$F$_5$SO$_2$)$_2$N$^-$, (C$_2$F$_5$SO$_2$)(CF$_3$SO$_2$)N$^-$, NO$_3^-$, Al$_2$Cl$_7^-$, CH$_3$COO$^-$, (CF$_3$SO$_2$)$_3$C$^-$, (CF$_3$CF$_2$SO$_2$)$_2$N$^-$, (CF$_3$)$_2$PF$_4^-$, (CF$_3$)$_3$PF$_3^-$, (CF$_3$)$_4$PF$_2^-$, (CF$_3$)$_5$PF$^-$, (CF$_3$)$_6$P$^-$, SF$_5$CF$_2$SO$_3^-$, SF$_5$CHFCF$_2$SO$_3^-$, CF$_3$CF$_2$(CF$_3$)$_2$CO$^-$, (CF$_3$SO$_2$)$_2$CH$^-$, (SF$_5$)$_3$C$^-$, (O(CF$_3$)$_2$C$_2$(CF$_3$)$_2$O)$_2$PO$^-$, and (CF$_3$SO$_2$)2N$^-$. In some embodiments, the polymeric ionic liquid may be, for example, poly(diallyldimethylammonium) trifluoromethanesulfonylimide (poly(diallyldimethylammonium)TFSI), poly(1-allyl-3-methylimidazolium trifluoromethanesulfonylimide), poly(N-methyl-N-propylpiperidinium bis(trifluoromethanesulfonyl)imide), or a combination thereof.

In one or more embodiments, the lithium salt may be, for example, LiPF$_6$, LiBF$_4$, LiSbF$_6$, LiAsF$_6$, LiClO$_4$, LiCF$_3$SO$_3$, Li(CF$_3$SO$_2$)$_2$N, LiC$_4$F$_9$SO$_3$, LiAlO$_2$, LiAlCl$_4$, LiN(C$_x$F$_{2x+1}$SO$_2$)(C$_y$F$_{2y+1}$SO$_2$) (where 1≤x≤20 and 1≤y≤20), LiCl, LiI or a combination thereof.

The polymer included in the polymer solid electrolyte may be, for example, a compound including 10 or more, 20 or more, 50 or more, or 100 or more repeating units. A weight average molecular weight of the polymer included in the polymer solid electrolyte may be, for example, 1000 Dalton (Da) or more, 10,000 Da or more, 100,000 Da or more, or 1,000,000 Da or more.

The gel electrolyte may be, for example, a polymer gel electrolyte. For example, in some embodiments, the gel electrolyte may have a gel state without including a polymer. In some embodiments, the polymer gel electrolyte may include, for example, a liquid electrolyte and a polymer, or an organic solvent and a polymer having an ion-conductive functional group. The polymer gel electrolyte may be, for example, a polymer electrolyte in a gel state at 25 °C and 1 atm. The polymer gel electrolyte may have, for example, a gel state without including a liquid. The liquid electrolyte utilized in the polymer gel electrolyte may be, for example, a mixture of an ionic liquid, a lithium salt, and an organic solvent; a mixture of a lithium salt and an organic solvent; a mixture of an ionic liquid and an organic solvent; or a mixture of a lithium salt, an ionic liquid, and an organic solvent. The polymer utilized in the polymer gel electrolyte may be selected from polymers utilized in the polymer solid electrolyte. The organic solvent may be selected from organic solvents utilized in liquid electrolytes. The lithium salt may be selected from lithium salts utilized in polymer solid electrolyte. The ionic liquid may refer to a salt in a liquid state, and a molten salt at room temperature composed solely of ions and having a melting point of room temperature. The ionic liquid may include, for example, at least one compound including a) at least one cation selected from ammonium, pyrimidium, pyridinium, pyrimidium, imidazolium, piperidinium, pyrazolium, oxazolium, pyridazinium, phosphonium, sulfonium, triazole, and any mixture thereof, and b) at least one anion selected from $BF_4^-$, $PF_6^-$, $AsF_6^-$, $SbF_6^-$, $AlCla^-$, $HSO_4^-$, $ClO_4^-$, $CH_3SO_3^-$, $CF_3CO_2^-$, $Cl^-$, $Br^-$, $I^-$, $SO_4^-$, $CF_3SO_3^-$, $(FSO_2)_2N^-$, $(C_2F_5SO_2)_2N^-$, $(C_2F_5SO_2)(CF_3SO_2)N^-$, and $(CF_3SO_2)_2N^-$. For example, in some embodiments, the polymer solid electrolyte may be impregnated with a liquid electrolyte in a secondary battery to form a polymer gel electrolyte. In some embodiments, the polymer gel electrolyte may further include inorganic particles. The polymer included in the polymer gel electrolyte may be a compound including, for example, 10 or more, 20 or more, 50 or more, or 100 or more repeating units. A weight average molecular weight of the polymer included in the polymer gel electrolyte may be, for example, 500 Da or more, 1000 Da or more, 10,000 Da or more, 100,000 Da or more, or 1,000,000 Da or more.

According to one or more embodiments, a method of manufacturing a dry electrode is provided.

A method of manufacturing a dry electrode may include: providing a dry electrode film; and disposing/placing the dry electrode film on one side or both (e.g., opposite) sides of the electrode current collector.

The providing of the dry electrode film may include: preparing a dry mixture by dry mixing a dry electrode active material, a dry conductive material, and a dry binder; and preparing a dry electrode film by molding the dry mixture.

First, an electrode active material, a dry conductive material, and a dry binder are dry-mixed to prepare a dry mixture. For example, the dry electrode active material, the dry conductive material and the dry binder are dry-mixed to prepare a dry mixture.

The dry mixing refers to mixing in a state not including a processing solvent. The processing solvent may be, for example, a solvent utilized to prepare an electrode slurry in the art. The processing solvent may be, for example, water and N-methylpyrrolidone (NMP), but embodiments of the present disclosure are not limited thereto, and any processing solvents commonly utilized to prepare electrode slurries may be utilized. The dry mixing may be performed, for example, utilizing a stirrer at a temperature of 15 °C to 65 °C at a rotation speed of 10 rpm to 10000 rpm. The dry mixing may be performed, for example, utilizing a stirrer for 1 minute to 200 minutes.

The dry mixing may be performed, for example, once or more. First, the dry electrode active material, the dry conductive material, and the dry binder are subjected to primary dry mixing to prepare a first dry mixture. The primary dry mixing may be performed, for example, at a temperature of 25 °C to 65 °C at a rotation speed of 10 rpm to 2000 rpm for 15 minutes or less. Subsequently, the first dry mixture may further be subjected to secondary dry mixing to prepare a second mixture. The secondary dry mixing may be performed, for example, at a temperature of 25 °C to 65 °C at a rotation speed of 3000 rpm to 9000 rpm for 10 minutes to 60 minutes. Via the secondary dry mixing, a dry mixture including a fibrillated dry binder may be obtained.

The stirrer may be, for example, a kneader. The stirrer may include, for example, a chamber; at least rotary shaft disposed/placed in the chamber and rotating; and a blade rotatably coupled to the rotary and arranged in a longitudinal direction of the rotary shaft. The blade may include, for example, at least one selected from a ribbon blade, a sigma blade, a Z blade, a dispersion blade, and a screw blade. Because the stirrer includes the blade, the electrode active material, the dry conductive material, and the dry binder may be effectively mixed to prepare a dough-like mixture without utilizing a solvent.

The dry binder may be, for example, a vinylidene fluoride/hexafluoropropylene copolymer, polyvinylidene fluoride, polyacrylonitrile, polymethylmethacrylate, polytetrafluoroethylene (PTFE), a mixture thereof, or a styrene butadiene rubber polymer. The dry binder may be selected from dry binders utilized in the above-described dry electrode film.

The dry conductive material may be, but is not limited to, carbon black, graphite particulates, natural graphite, artificial graphite, acetylene black, Ketjen black, carbon fiber; carbon nanotubes; metal such as copper, nickel, aluminum, and silver each of which is utilized in powder, fiber, or tube form; or conductive polymers such as polyphenylene derivatives, and any materials commonly utilized in the art as conductive materials may also be utilized. In some embodiments, the conductive material is, for example, a carbonaceous conductive material. The dry conductive material may be selected from dry conductive materials utilized in the above-described dry electrode film.

In one or more embodiments, a plasticizer or a pore forming agent may further be added to the dry mixture to form pores inside the electrode plate (e.g., dry electrode film).

Amounts of the dry electrode active material, the dry binder, and the dry conductive material utilized in the dry electrode film are levels commonly utilized in lithium batteries.

In the dry positive electrode film, a dry positive active material may be utilized as the dry electrode active material. For descriptions of the dry positive active material, refer to the dry electrode film described above. In the dry negative electrode film, a dry negative active material may be utilized as the dry electrode active material. For descriptions of the dry negative active material, refers to the dry electrode film described above.

Subsequently, the dry mixture is molded to prepare a dry electrode film.

The prepared dry mixture may be extruded into a sheet or film form by utilizing an extrusion apparatus. A pressure during the extrusion may be, for example, from 4 MPa to 100 MPa.

Subsequently, an electrode current collector in which an interlayer is disposed on one side or both (e.g., opposite) sides of the substrate is provided.

The providing of the electrode current collector in which the interlayer is disposed on one side or both (e.g., opposite) sides of the substrate may include, for example, providing a substrate; and disposing the interlayer on one side or both (e.g., opposite) sides of the substrate.

For detailed descriptions of the substrate of the electrode current collector, refer to the electrode current collector described above. In some embodiments, a substrate of a positive electrode current collector may be, for example, an aluminum foil. A substrate of a negative electrode current collector may , for example, a copper foil.

The disposing of the interlayer on one side or both (e.g., opposite) sides of the substrate may include dry coating and/or wet coating. The dry coating may be performed, for example, by depositing a carbonaceous conductive material and/or a precursor thereof on one side or both (e.g., opposite) sides of the electrode current collector. Deposition may be performed at room temperature or a high temperature at an atmospheric pressure or in a vacuum. The interlayer disposed by dry coating may not include(e.g., may exclude) a (or any) binder in the embodiments of being formed of a carbonaceous material. The wet coating may be performed, for example, by coating a composition including a carbonaceous conductive material and a binder on one side or both (e.g., opposite) sides of the electrode current collector. The composition may include, for example, a carbonaceous conductive material, a binder, and a processing solvent. For detailed descriptions of the carbonaceous conductive material and the binder, refer to the electrode described above. The processing solvent may be selected from solvents utilized to prepare an electrode slurry. The processing solvent is removed by drying after the composition is coated on the electrode current collector. A coating method such as spin coating or dip coating may be utilized, but embodiments of the present disclosure are not limited thereto, and any coating methods commonly available in the art may also be utilized.

Subsequently, the dry electrode film is disposed or placed on one side or both (e.g., opposite) sides of the electrode current collector, concurrently (e.g., simultaneously) or sequentially, to prepare a dry electrode.

In one or more embodiments, a rolling operation may further be performed while or after the dry electrode film is disposed/placed on one side or both (e.g., opposite) sides of the electrode current collector.

The rolling may be performed, for example, by utilizing a roll press or a flat press, without being limited thereto. The rolling may be performed, for example, at a pressure of 1.0 ton/cm to 10.0 ton/cm. A too high pressure during rolling may cause cracks in the electrode current collector. A too low pressure during rolling may cause a decrease in binding force between the electrode current collector and the dry electrode film.

In one or more embodiments, the lithium battery may be manufactured by the following example method, but the method is not limited thereto and may vary according to required conditions.

First, one or both (e.g., simultaneously) of a positive electrode and a negative electrode may be prepared according to the above-described method of manufacturing a dry electrode. In some embodiments, one selected from the positive electrode and the negative electrode may be prepared according to the above-described method, the other electrode may be prepared according to a wet method. For example, the other electrode may be prepared by preparing an electrode slurry including an electrode active material, a conductive material, a binder, and a solvent, coating the prepared electrode slurry on an electrode current collector, and drying the composition. The conductive material and the binder included in the electrode prepared by the wet method may be selected from the conductive materials and the binders utilized in the above-described method of manufacturing the dry electrode.

Subsequently, a separator to be disposed between the positive electrode and the negative electrode is prepared.

Any separators commonly utilized in the art for lithium batteries may be utilized. For example, any separator having low resistance to ion migration of the electrolyte and excellent or suitable electrolyte-retaining ability may be utilized. For example, in one or more embodiments, the separator may be selected from glass fiber, polyester, Teflon, polyethylene, polypropylene, polytetrafluoroethylene (PTFE), or a combination thereof, each of which is a non-woven or woven fabric. For example, a windable separator such as polyethylene or polypropylene may be utilized in lithium-ion batteries and a separator having excellent or suitable organic electrolyte-retaining ability may be utilized in lithium-ion polymer batteries.

The separator is prepared according to the following example method. However, the method is not limited thereto and may be adjusted according to required conditions.

First, a polymer resin, a filler, and a solvent are mixed to prepare a separator composition. The separator composition is directly coated on an electrode and dried to prepare the separator. In some embodiments, the separator composition may be cast on a support and dried and then a separator film separated from the support is laminated on an electrode to form the separator.

A polymer (e.g., a polymer resin)utilized to prepare the separator is not particularly limited, and any polymers commonly utilized as a binder for electrode plates may also be utilized. For example, a vinylidene fluoride/hexafluoropropylene copolymer, polyvinylidenefluoride (PVDF), polyacrylonitrile, polymethylmethacrylate, or any mixtures thereof may be utilized.

Subsequently, an electrolyte is prepared. For detailed descriptions of the electrolyte, refer to the lithium battery described above.

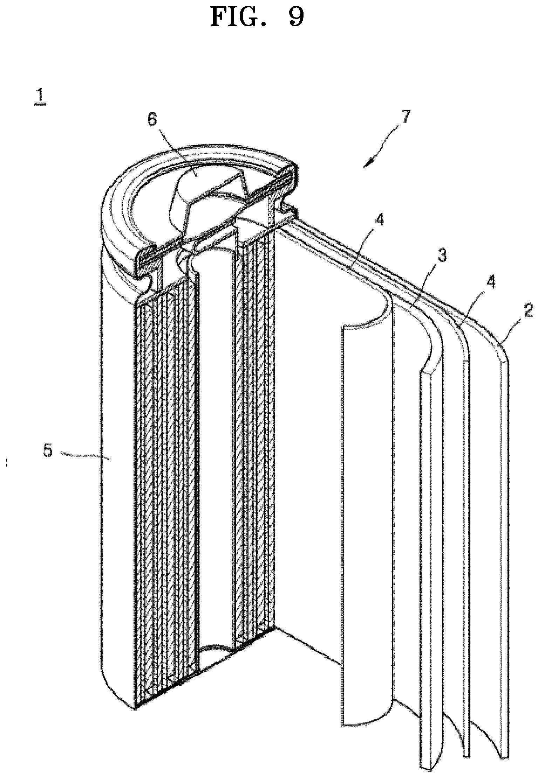

As shown in FIG. 9, according to one or more embodiments of the present disclosure, a lithium battery 1 may include a positive electrode 3, a negative electrode 2, and a separator 4. The positive electrode 3, the negative electrode 2, and the separator 4 may be wound or folded to form a battery assembly 7. The battery assembly 7 may be accommodated in a battery case 5. An organic electrolytic solution may be injected into the battery case 5 and the battery case 5 may be sealed with a cap assembly 6 to complete preparation of the lithium battery 1. The battery case 5 may be a cylindrical type or kind, but is not limited thereto and, for example, a rectangular type or kind or a thin film type or kind may also be utilized.

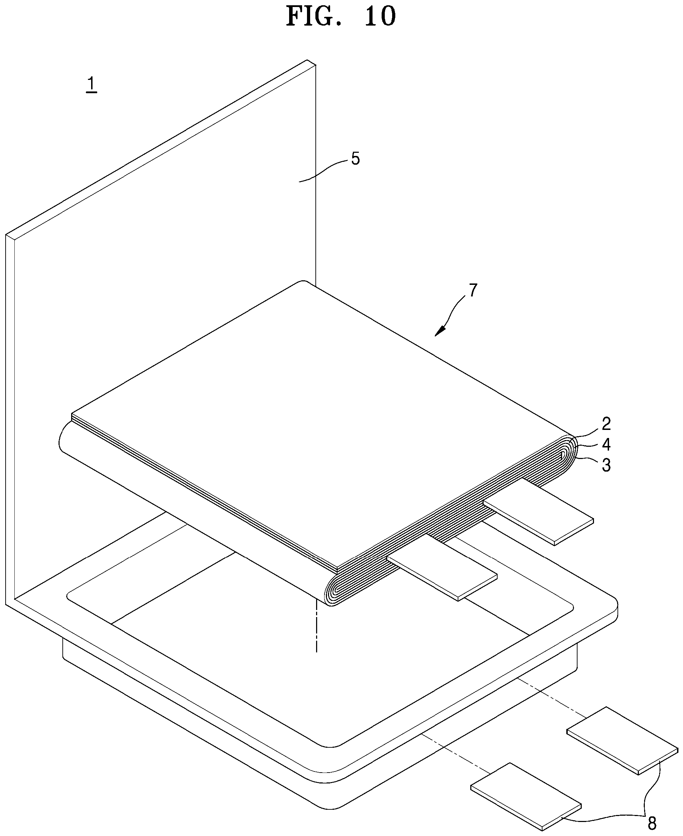

As shown in FIG. 10, according to one or more embodiments of the present disclosure, a lithium battery 1 may include a positive electrode 3, a negative electrode 2, and a separator 4. The separator 4 may be between the positive electrode 3 and the negative electrode 2, and the positive electrode 3, the negative electrode 2, and the separator 4 may be wound or folded to form a battery assembly 7. The battery assembly 7 may be accommodated in a battery case 5. The lithium metal battery 1 may include an electrode tab 8 serving as an electrical passage for inducing a current generated in the battery assembly 7 to the outside. An organic electrolytic solution may be injected into the battery case 5 and the battery case 5 may be sealed to complete preparation of the lithium battery 1. The battery case 5 may be a rectangular type or kind, but is not limited thereto, and for example, a cylindrical type or kind or a thin film type or kind may also be utilized.

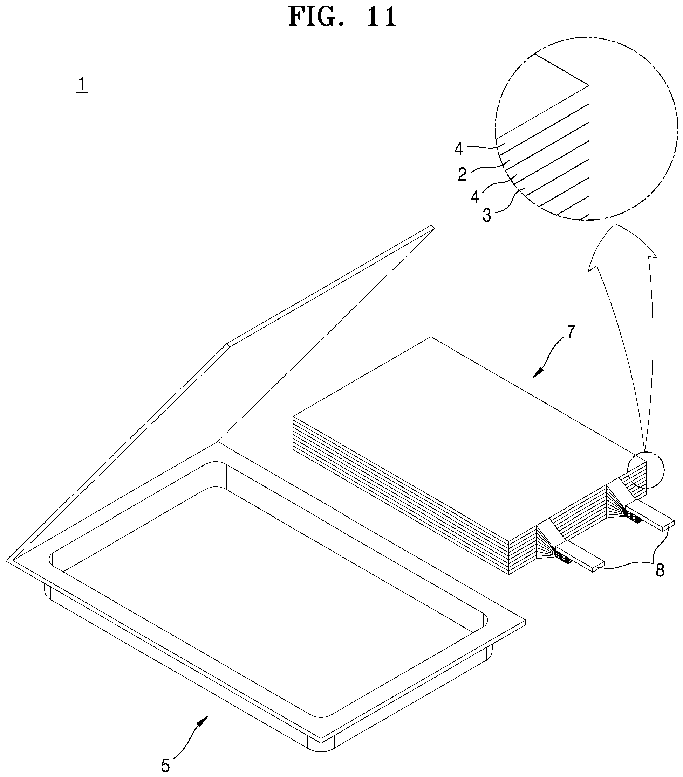

As shown in FIG. 11, according to one or more embodiments of the present disclosure, a lithium battery 1 may include a positive electrode 3, a negative electrode 2, and a separator 4. The separator 4 may be between the positive electrode 3 and the negative electrode 2 to form a battery assembly 7. The battery assembly 7 may be stacked in a bi-cell structure and accommodated in a battery case 5. The lithium metal battery 1 may include an electrode tab 8 serving as an electrical passage for inducing a current generated in the battery assembly 7 to the outside. An organic electrolytic solution may be injected into the battery case 5 and the battery case 5 may be sealed to complete preparation of the lithium battery 1. The battery case 5 may be a rectangular type or kind, but is not limited thereto, and for example, a cylindrical type or kind or a thin film type or kind may also be utilized.

In a pouch-type or kind lithium battery, a pouch may be utilized as the battery case of the lithium batteries shown in FIGs. 9 to 11. A pouch-type or kind lithium battery may include at least one battery assembly. A separator may be disposed/placed between a negative electrode and a negative electrode to form the battery assembly. The battery assembly may be stacked in a bi-cell structure, impregnated with an organic electrolytic solution, accommodated in a pouch, and sealed to complete preparation of the pouch-type or kind lithium battery. For example, in one or more embodiments, the above-described positive electrode, negative electrode, and separator may be simply stacked in a battery assembly and accommodated in a pouch. In some embodiments, the positive electrode, the negative electrode, and the separator may be wound in a jelly-roll form or folded in a battery assembly and accommodated in a pouch. Subsequently, the organic electrolytic solution may be injected into the pouch and the pouch is sealed to complete preparation of the lithium battery.

Due to excellent or suitable lifespan properties and high-rate characteristics, lithium batteries may be utilized, for example, in electric vehicles (EVs). For example, lithium batteries may be utilized in hybrid vehicles such as plug-in hybrid electric vehicles (PHEVs). In some embodiments, lithium batteries may be utilized in the fields requiring a large amount of power storage. For example, lithium batteries may be utilized in one or more of E-bikes and electric tools.

A plurality of lithium batteries may be stacked to form a battery module, and a plurality of battery modules may constitute a battery pack. Such battery packs may be utilized in any device that requires high capacity and high output. For example, battery packs may be utilized in laptop computers, smart phones, and electric vehicles. For example, a battery module may include a plurality of batteries and a frame holding the batteries. The battery pack may include, for example, a plurality of battery modules and a bus bar connecting the battery modules. The battery module and/or the battery pack may further include a cooling device. The plurality of battery packs may be controlled or selected by a battery management system. The battery management system may include a battery pack, and a battery control device connected to the battery pack.

According to one or more embodiments of the present disclosure, a method of preparing a dry electrode active material may include: providing a core; providing a composite; and preparing a dry electrode active material by mechanically milling the core and the composite, wherein the composite may include: at least one first metal oxide; and a first carbonaceous material, wherein the first metal oxide may be disposed in a first carbonaceous material matrix of the first carbonaceous material, the first metal oxide may be represented by formula $M_aO_b$ (where $0<a\leq3$, $0<b<4$, and in the case (e.g., embodiments) where a is 1, 2, or 3, b is not an integer), wherein M may include at least one metal selected from elements of Groups 2 to 16 of the periodic table.

As the core, for example, a lithium transition metal oxide may be provided and utilized. The lithium transition metal oxide may be, for example, a compound represented by one selected from Formulae 1 to 8.

The composite is provided. The providing of the composite may include, for example, supplying a reaction gas including a carbon source gas to a structure including a metal oxide, and performing heat treatment. In one or more embodiments, the providing of the composite may include, for example, preparing a composite by supplying at least one reaction gas including the carbon source gas to at least one second metal oxide represented by $M_aO_c$ (where $0<a\leq3$, $0<c\leq4$, and in the case (e.g., embodiments) where a is 1, 2, or 3, c is an integer), and performing heat treatment, wherein the M may include at least one metal selected from elements of Groups 2 to 13, 15, and 16 of the periodic table.

The carbon source gas may be a gas formed of a compound represented by Formula 10, or a mixed gas including at least one selected from the compound represented by Formula 10, a compound represented by Formula 11, and an oxygen-containing gas represented by Formula 12.

$$\text{Formula 10} \qquad C_nH_{(2n+2-a)}[OH]_a$$

In Formula 10, n is from 1 to 20, and a is 0 or 1.

$$\text{Formula 11} \qquad C_nH_{2n}$$

In Formula 11, n is from 2 to 6.

$$\text{Formula 12} \qquad C_xH_yO_z$$

In Formula 12, x is an integer from 0 or 1 to 20, y is an integer from 0 or 1 to 20, and z is 1 or 2.

The compound represented by Formula 10 and the compound represented by Formula 11 may each be at least one selected from methane, ethylene, propylene, methanol, ethanol, and propanol. The oxygen-containing gas represented by Formula 12 may include, for example, carbon dioxide ($CO_2$), carbon monoxide (CO), water vapor ($H_2O$), or a mixture thereof.

After supplying the reaction gas including the carbon source gas to the second metal oxide represented by $M_aO_c$ (where $0<a\leq3$, $0<c\leq4$, in the case (e.g., embodiments) where a is 1, 2, or 3, c is an integer) and performing heat treatment, a cooling process utilizing at least one inert gas selected from nitrogen, helium, and argon may be further performed. The cooling process may refer to a process of adjusting temperature to room temperature (about 20 °C to about 25 °C). The carbon source gas may include at least one inert gas selected from nitrogen, helium, and argon.

In the method of manufacturing the composite, a process of growing the carbonaceous material, for example, graphene, may be performed under one or more suitable conditions according to a gas phase reaction.

In one or more embodiments, according to a first condition, for example, first, methane is supplied to a reactor provided with the second metal oxide represented by $M_aO_c$ (where $0<a\leq3$, $0<c\leq4$, if (e.g., when) a is 1, 2, or 3, c is an integer), and the reactor is heated to a heat treatment temperature T. The heating time up to the heat treatment temperature T is about 10 minutes to about 4 hours, and the heat treatment temperature T is in a range of 700 °C to 1100 °C. Heat treatment is performed at the heat treatment temperature T for a reaction time. The reaction time is, for example, from 4 hours to 8 hours. The resultant product of heat treatment is cooled to room temperature to prepare a composite. A cooling time from the heat treatment temperature T to room temperature is, for example, from 1 hour to 5 hours.

In one or more embodiments, according to a second condition, for example, first, hydrogen is supplied to a reactor provided with the second metal oxide represented by $M_aO_c$ (where $0<a\leq3$, $0<c\leq4$, and in the case (e.g., embodiments) where a is 1, 2, or 3, c is an integer), and temperature is raised to a heat treatment temperature T. A heating time up to the heat treatment temperature is from 10 minutes to 4 hours, and the heat treatment temperature T is in a range of 700 °C to 1100 °C. After heat treatment is performed at the heat treatment temperature T for a set or predetermined reaction time, methane gas is supplied, and heat treatment is performed for a residual (remaining) reaction time. The reaction time is, for example, from 4 hours to 8 hours. The resultant product of heat treatment is cooled to room temperature to prepare a composite. Nitrogen is supplied during the process of cooling the resultant product. A cooling time from the heat treatment temperature T to room temperature is, for example, from 1 hour to 5 hours.

In one or more embodiments, according to a third condition, for example, first, hydrogen is supplied to a reactor provided with the second metal oxide represented by $M_aO_c$ (where $0<a\leq3$, $0<c\leq4$, and in the case (e.g., embodiments) where a is 1, 2, or 3, c is an integer), and is heated to a heat treatment temperature T. A heating time up to the heat treatment temperature T is from 10 minutes to 4 hours, and the heat treatment temperature (T) is from 700 °C to 1100 °C. After heat treatment is performed at the heat treatment temperature T for a set or predetermined reaction time, a mixed gas of methane and hydrogen is supplied, and heat treatment is performed for residual (remaining) reaction time. The reaction time is, for example, from 4 hours to 8 hours. The resultant product of heat treatment is cooled to room temperature to prepare a composite. Nitrogen is supplied during the process of cooling the resultant product. A cooling time from the heat treatment temperature T to room temperature is, for example, from 1 hour to 5 hours.

In the process of preparing the composite, in embodiments in which the carbon source gas includes water vapor, a composite having excellent or suitable conductivity may be obtained. An amount of water vapor in the gas mixture is not limited, and may be, for example, in some embodiments, from 0.01 vol% to 10 vol% based on 100 vol% of the total carbon source gas. The carbon source gas may be: for example, methane; a mixed gas containing methane and an inert gas; or a mixed gas containing methane and an oxygen-containing gas.

In some embodiments, the carbon source gas may be: for example, methane; a mixed gas of methane and carbon dioxide; or a mixed gas of methane, carbon dioxide, and water vapor. A molar ratio of methane to carbon dioxide in the mixed gas of methane and carbon dioxide may be from about 1: 0.20 to about 1:0.50, from about 1: 0.25 to about 1:0.45, or from about 1:0.30 to about 1: 0.40. In the mixed gas of methane, carbon dioxide, and water vapor, a molar ratio of methane to carbon dioxide to water vapor may be from about 1:0.20 to 0.50:0.01 to 1.45, about 1:0.25 to 0.45: 0.10 to 1.35, or about 1: 0.30 to 0.40: 0.50 to 1.0.

In some embodiments, the carbon source gas may be, for example, carbon monoxide or carbon dioxide. In some embodiments, the carbon source gas may be, for example, a mixed gas of methane and nitrogen. In the mixed gas of methane and nitrogen, a molar ratio of methane to nitrogen may be from about 1: 0.20 to about 1: 0.50, from about 1: 0.25 to about 1: 0.45, or from about 1: 0.30 to about 1: 0.40. In some embodiments, the carbon source gas may not include(e.g., may exclude) an (or any) inert gas such as nitrogen.

In one or more embodiments, a heat treatment pressure may be selected in consideration of the heat treatment temperature, a composition of the gas mixture, and the desired or suitable coating amount of carbon. The heat treatment pressure may be controlled or selected by adjusting an amount of an inflowing gas mixture and an amount of an outflowing gas mixture. The heat treatment pressure may be, for example, 0.5 atm or more, 1 atm or more, 2 atm or more, 3 atm or more, 4 atm or more, or 5 atm or more. In some embodiments, the heat treatment pressure may be, for example, from 0.5 atm to 10 atm, from 1 atm to 10 atm, from 2 atm to 10 atm, from 3 atm to 10 atm, from 4 atm to 10 atm, or from 5 atm to 10 atm.

A heat treatment time is not particularly limited and may be appropriately adjusted according to heat treatment temperature, heat treatment pressure, a composition of the gas mixture, and a desired or suitable amount of carbon coating. For example, in some embodiments, a reaction time at the heat treatment temperature is from 10 minutes to 100 hours, from 30 minutes to 90 hours, or from 50 minutes to 40 hours. For example, as the heat treatment time increases, the amount of deposited carbon, for example, graphene (carbon), is increased, and thus the electrical properties of the composite may be improved. However, this tendency may not necessarily be proportional to time. For example, after a set or predetermined time has elapsed, carbon deposition, for example, graphene deposition, may no longer occur or the deposition rate may decrease.

Through the above-described gas phase reaction of the carbon source gas, even at a low temperature, a composite may be obtained by uniformly coating a carbonaceous material, such as, graphene, on at least one selected from a second metal oxide represented by $M_aO_c$ (where $0<a\leq3$, $0<c\leq4$, and in the case (e.g., embodiments) where a is 1, 2, or 3, c is an integer) and a reduction product thereof, that is, a first metal oxide represented by $M_aO_b$ (where $0<a\leq3$, $0<b<4$, and in the case (e.g., embodiments) where a is 1, 2, or 3, and b is not an integer).

For example, in one or more embodiments, the composite may include: a carbonaceous material matrix, such as a graphene matrix, having at least one structure selected from a spherical structure (e.g., a substantially spherical structure), a spiral structure in which a plurality of spherical structures (e.g., substantially spherical structures) are connected to each other, a cluster structure in which a plurality of spherical structures (e.g., substantially spherical structures) aggregate with each other, and a sponge structure; and at least one selected from a first metal oxide represented by $M_aO_b$ (where $0<a\leq3$, $0<b<4$, and in the case (e.g., embodiments) where a is 1, 2, or 3, and b is not an integer) and a second metal oxide represented by $M_aO_c$ (where $0<a\leq3$, $0<c\leq4$, and in the case (e.g., embodiments) where a is 1, 2, or 3, c is an integer), which are located in the carbonaceous material matrix.

Subsequently, the lithium transition metal oxide and the composite are mechanically milled to prepare the dry electrode active material. In some embodiments, a Nobilta mixer may be utilized in the milling. The number of rotations of the mixer during milling may be, for example, from 1000 rpm to 5000 rpm. A milling time may be, for example, from 5 minutes to 100 minutes. An average particle diameter D50 of the composite utilized in the mechanical milling of the lithium transition metal oxide and the composite may be, for example, from 50 nm to 200 nm, from 100 nm to 300 nm, or from 200 nm to 500 nm. Milling methods utilized in the mechanical milling are not particularly limited, and any methods available in the art to bring the lithium transition metal oxide into contact with the composite utilizing a machine may also be utilized.

Hereinafter, one or more embodiments will be described in more detail with reference to the following examples and comparative examples. However, these examples and comparative examples are not intended to limit the purpose and scope of the one or more embodiments.

**Preparation of Composite**

**Preparation Example 1: $Al_2O_3$@Gr Composite**

$Al_2O_3$ particles (average particle diameter: about 15 nm) were placed in a reactor, and then a temperature inside the reactor was raised up to 1000 °C while supplying $CH_4$ into the reactor at about 300 sccm (i.e., standard cubic centimeters per minute) and 1 atm for about 30 minutes.

Subsequently, heat treatment was performed while maintaining the temperature for 7 hours. Then, the temperature inside the reactor was adjusted to room temperature (20 °C to 25 °C) to obtain a composite in which $Al_2O_3$ particles and $Al_2O_z$ (where 0<z<3) particles, which are reduction products of $Al_2O_3$, were embedded in graphene.

An amount of alumina included in the composite was 60 wt%.

**Preparation Example 2: $SiO_2$@Gr Composite**

$SiO_2$ particles (average particle diameter: about 15 nm) were placed in a reactor, and then a temperature inside the reactor was raised up to 1000 °C while supplying $CH_4$ into the reactor at about 300 sccm and 1 atm for about 30 minutes.

Subsequently, heat treatment was performed while maintaining the temperature for 7 hours. Then, the temperature inside the reactor was adjusted to room temperature (20 °C to 25 °C) to obtain a composite in which $SiO_2$ particles and $SiO_y$ (where 0<y<2) particles, which are reduction products of $SiO_2$, were embedded in graphene.

**Preparation of Composite Positive Active Material**

**Example 1: $Al_2O_3$@Gr Composite 0.4 wt% (alumina 0.24 wt%)-coated Large-diameter NCA91**

$LiNi_{0.91}Co_{0.05}Al_{0.04}O_2$ (herein, referred to as NCA91) having an average particle diameter D50 of 14 $\mu$m and the composite prepared in Preparation Example 1 were milled utilizing a Nobilta Mixer (Hosokawa, Japan) at a rotation speed of about 1000 rpm to about 2000 rpm for about 5 minutes to about 30 minutes to obtain a composite positive active material. A mixing weight ratio of the NCA91 to the composite prepared in Preparation Example 1 was 99.6:0.4.

**Example 2: $Al_2O_3$@Gr Composite 0.4 wt% (alumina 0.24 wt%)-coated Small-diameter NCA91**

$LiNi_{0.91}Co_{0.05}Al_{0.04}O_2$ (herein, referred to as NCA91) having an average particle diameter D50 of 3.5 $\mu$m and the composite prepared in Preparation Example 1 were milled utilizing a Nobilta Mixer (Hosokawa, Japan) at a rotation speed of about 1000 rpm to about 2000 rpm for about 5 minutes to about 30 minutes to obtain a composite positive active material. A mixing weight ratio of the NCA91 to the composite prepared in Preparation Example 1 was 99.6:0.4.

**Example 3: Large-diameter NCA91 Coated with $Al_2O_3$@Gr Composite 0.2 wt% (alumina 0.12 wt%) and CNT 0.05 wt%**

$LiNi_{0.91}Co_{0.05}Al_{0.04}O_2$ (herein, referred to as NCA91) having an average particle diameter D50 of 14 $\mu$m, the composite prepared in Preparation Example 1, and carbon nanotubes (hereinafter, referred to as CNTs) were milled utilizing a Nobilta Mixer (Hosokawa, Japan) at a rotation speed of about 1000 rpm to about 2000 rpm for about 5 minutes to about 30 minutes to obtain a composite positive active material. By mixing the NCA91, the composite, and the CNTs at a ratio of 97.5:0.2:0.05, the composite positive active material was prepared.

The carbon nanotubes include a carbon nanotube primary structure and a carbon nanotube secondary structure in which a plurality of carbon nanotube units aggregate.

The carbon nanotube primary structure includes (e.g., consists of) one carbon nanotube unit. The carbon nanotube unit may have a length of 200 nm to 300 nm, and the carbon nanotubes had a diameter of about 10 nm.

The plurality of carbon nanotube units aggregate to form the carbon nanotube secondary structure. The carbon nanotube secondary structure may have a length of 500 nm and a diameter of about 40 nm.

**Comparative Example 1: Large-diameter Bare NCA91**

$LiNi_{0.91}Co_{0.05}Al_{0.04}O_2$ (herein, referred to as NCA91) having an average particle diameter D50 of 14 $\mu$m was

utilized as a composite positive active material.

**Comparative Example 2: SiO$_2$@Gr Composite 0.4 wt%-coated NCA91**

A composite positive active material was prepared in substantially the same manner as in Example 1, except that the **SiO$_2$@Gr** composite prepared in Preparation Example 2 was utilized instead of the **Al$_2$O$_3$@Gr** composite prepared in Preparation Example 1.

**Preparation of Lithium Battery (Half Cell)**

**Example 4: Dry Positive Electrode, Core/shell Composite Positive Active Material**

**Preparation of Dry Positive Electrode Film and Dry Positive Electrode**

The dry composite positive active material prepared in Example 1, a dry carbonaceous conductive material, and polytetrafluoroethylene (PTFE) as a dry binder were added to a blade mixer in a weight ratio of 96:2:2 and subjected primary mixing at 25 °C at a speed of 1200 rpm for 10 minutes to prepare a first dry mixture in which the dry positive active material, the dry conductive material, and the dry binder were uniformly mixed. As the dry carbonaceous conductive material, a mixture of carbon nanotubes (CNTs) and Ketjen black (ECP) in a weight ratio of 7:3 was utilized.

Subsequently, for fibrilization of the binder, the first dry mixture was further subjected to secondary mixing at 25 °C utilizing a blade mixer at a speed of 4000 rpm for 25 minutes to prepare a second dry mixture.

A separate solvent was not utilized in the preparation of the first dry mixture and the second dry mixture.

The prepared second dry mixture was added to an extruder and extruded to prepare a dry positive electrode film in the form of a sheet, as a self-standing film. A pressure at the time of extrusion was 60 MPa.

The prepared dry positive electrode film, as a self-standing film, was rolled to prepare a rolled dry positive electrode film as a self-standing film. A pressure at the time of rolling was 3.5 ton/cm$^2$. A thickness of the dry positive electrode film was about 200 $\mu$m.

A positive electrode current collector was prepared by coating a carbon layer on one side of a 25 $\mu$m-thick aluminum thin film.

The carbon layer was formed by applying a composition including a carbonaceous conductive material (Danka black) and polyvinylidene fluoride (PVDF) thereto and drying the composition. A thickness of the carbon layer disposed on one side of the positive electrode current collector was about 1 $\mu$m.

The rolled dry positive electrode film was disposed on one side of the positive electrode current collector to prepare a dry positive electrode.

**Preparation of Coin Cell**

A coin cell was prepared by utilizing the positive electrode prepared as described above, lithium metal as a counter electrode, a PTFE separator, and a solution of 1.3 M LiPF$_6$ dissolved in a mixed solvent of ethylene carbonate (EC)+ethylmethyl carbonate (EMC)+dimethyl carbonate (DMC) (volume ratio of 3:4:3), as a solvent.

**Example 5: Bimodal Dry Positive Active Material**

A dry electrode film, a dry positive electrode, and a coin cell were prepared in substantially the same manner as in Example 4, except that a mixture of the dry composite positive active material prepared in Example 1 (large-diameter dry composite positive active material) and the dry composite positive active material prepared in Example 2 (small-diameter dry composite positive active material) mixed in a weight ratio of 7:3 instead of the dry composite positive active material of Example 1.

**Example 6: CNT-added Composite Positive Active Material**

A dry electrode film, a dry positive electrode, and a coin cell were prepared in substantially the same manner as in Example 4, except that the dry composite positive active material of Example 3 was utilized instead of the dry composite positive active material of Example 1.

**Comparative Example 3: Dry Positive Electrode and Bare NCA91 Positive Active Material**

A dry electrode film, a dry positive electrode, and a coin cell were prepared in substantially the same manner as in Example 4, except that the LiNi$_{0.91}$Co$_{0.05}$Al$_{0.04}$O$_2$ (hereinafter, referred to as NCA91) prepared in Comparative Example 1 was utilized instead of the dry composite positive active material of Example 1.

**Comparative Example 4: Wet Positive Electrode and Bare NCA91 Positive Active Material**

**Preparation of Positive Electrode**

A positive active material slurry was prepared by mixing LiNi$_{0.91}$Co$_{0.05}$Al$_{0.04}$O$_2$ (herein, referred to as NCA91) having an average particle diameter D50 of 14 $\mu$m, a carbonaceous conductive material, and polyvinylidene fluoride (PVDF) in a weight ratio of 96:2:2 in an agate mortar together with N-methylpyrrolidone (NMP). As the carbonaceous conductive material, a mixture of carbon nanotubes (CNTs) and Ketjen black (ECP) in a weight ratio of 7:3 was utilized.
The positive active material slurry was applied to one side of a 30 $\mu$m-thick positive electrode current collector by bar coating and dried at room temperature, and then further dried in a vacuum at 120 °C to prepare a stack structure.
The prepared stack structure was rolled to prepare a positive electrode in which the positive active material layer was disposed on the positive electrode current collector. A pressure at the time of rolling was 3.5 ton/cm$^2$. A thickness of the positive active material layer was about 200 $\mu$m.

**Preparation of Coin Cell**

A coin cell was prepared in substantially the same manner as in Example 4, except the positive electrode prepared as described above was utilized.

**Comparative Example 5: Dry Positive Electrode and SiO$_2$@Gr-coated Composite Positive Active Material**

A dry positive electrode film, a dry positive electrode, and a coin cell were prepared in substantially the same manner as in Example 4, except that the dry composite positive active material prepared in Comparative Example 2 was utilized instead of the dry composite positive active material prepared in Example 1.

**Evaluation Example 1: XPS Spectrum Evaluation**

In the process of preparing the composite prepared according to Preparation Example 1, XPS spectra were measured over time utilizing Quantum 2000 (Physical Electronics). XPS spectra of C 1s orbitals and Al 2p orbitals of samples were measured before heating, after 1 minute, after 5 minutes, after 30 minutes, after 1 hour, and after 4 hours, respectively. In the early stage of heating, only the peak for the Al 2p orbital appeared, and the peak for the C 1s orbital did not appear. After 30 minutes, the peak for the C 1s orbital appeared clearly, and a size of the peak for the Al 2p orbital was significantly reduced.
After 30 minutes, the peak for the C 1s orbital due to C-C bonds and C=C bonds caused by growth of graphene clearly appeared at around 284.5 eV.
As the reaction time elapsed, an oxidation number of aluminum decreased, and a position of the peak of Al 2p orbital was shifted to a lower binding energy (eV).
Therefore, it was confirmed that graphene grew from the Al$_2$O$_3$ particles, and Al$_2$O$_x$ (a reduction product of Al$_2$O$_3$, where 0<x<3) was formed as the reaction proceeds.
An average amounts of carbon and aluminum in 10 areas of the composite sample prepared in Preparation Example 1 was measured by XPS analysis results. For the measurement results, the deviation in the amount of aluminum for each area was calculated. The deviation of the aluminum amount was expressed as a percentage relative to the average value and was referred as uniformity. The percentage deviation of the average aluminum amount, that is, the uniformity of the aluminum amount, was 1 %. Therefore, it was confirmed that alumina was uniformly dispersed in the composite prepared in Preparation Example 1.

**Evaluation Example 2: SEM, HR-TEM, and SEM-EDS Analysis**

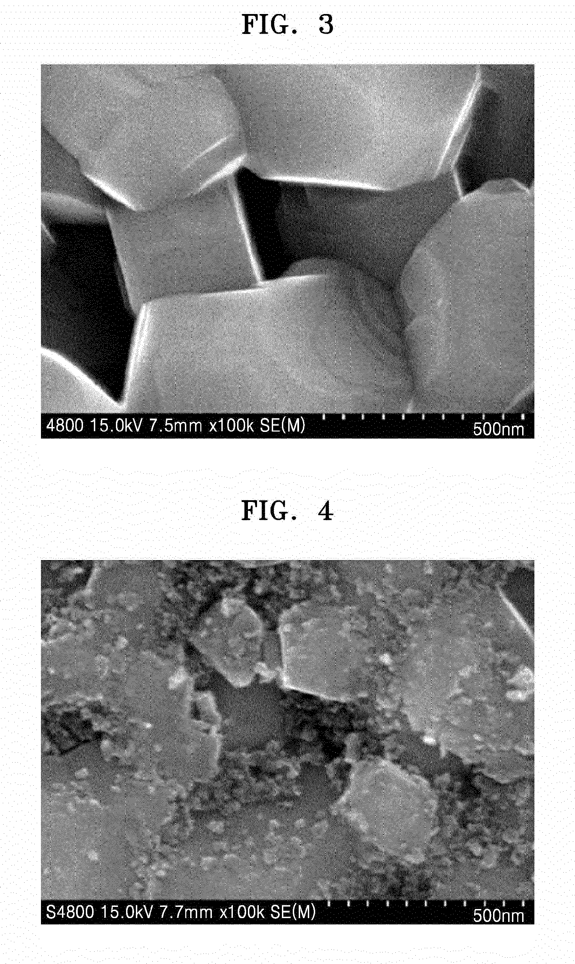

The composite prepared in Preparation Example 1, the composite positive active material prepared in Example 1, and the Bare NCA91 prepared in Comparative Example 1 were each analyzed by utilizing a scanning electron microscope (SEM), a high-resolution transmission electron microscope, and an energy-dispersive X-ray spectroscopy (EDS).
For SEM-EDS analysis, Philips' FEI Titan 80-300 was utilized. FIG. 3 is a scanning electron microscope (SEM) image of bare NCA91 prepared in Comparative Example 1. FIG. 4 is a SEM image of a composite positive active material prepared in Example 1.

The composite prepared according to Preparation Example 1 shows a structure in which $Al_2O_3$ particles and $Al_2O_z$ (where 0<z<3) particles, which are reduction products thereof, are embedded in graphene. It was confirmed that a graphene layer was located on the outside of one or more particles selected from $Al_2O_3$ particles and $Al_2O_z$ (where 0<z<3). Particles of at least one of $Al_2O_3$ or $Al_2O_z$ (where 0<z<3) are uniformly dispersed in the graphene matrix. A particle diameter of at least one of $Al_2O_3$ particles or $Al_2O_z$ (where 0<z<3) particles was about 20 nm. The composite prepared in Preparation Example 1 had a particle diameter of about 50 nm to about 200 nm.

Referring to FIG. 3, it was confirmed that the large-diameter NCA91 core was a secondary particle in which a plurality of primary particles aggregated and no coating layer was formed on the surface of the bare NCA91 prepared in Comparative Example 1.

Referring to FIG. 4, it was confirmed that the shell formed of the composite including graphene was disposed on the large-diameter NCA91 core in the composite positive active material prepared in Example 1.

In the SEM-EDS mapping analysis on the bare large-diameter NCA91 of Comparative Example 1 and the first core/shell structure prepared in Example 1, it was confirmed that the concentration of aluminum (Al) distributed on the surface of the first core/shell structure of Example 1 increased compared to that of the surface of the bare NCA91 of Comparative Example 1. In the first core/shell structure of Example 1, it was confirmed that the composite prepared in Preparation Example 1 was coated on the large-diameter NCA91 core to form a shell.

**Evaluation Example 3: XPS Spectrum Evaluation (Graphene-NCA Chemical Bond)**

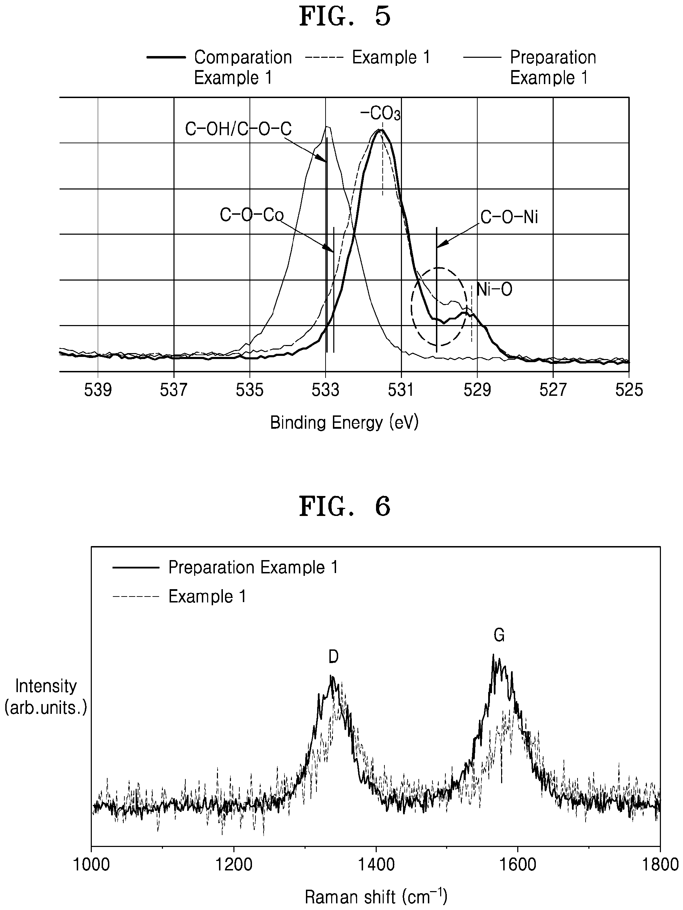

The composite prepared in Preparation Example 1, the large-diameter bare NCA91 of Comparative Example 1, and the composite positive active material prepared in Example 1 were each analyzed by XPS spectra of O 1s orbitals by utilizing Quantum 2000 (Physical Electronics), and the results are shown in FIG. 5.

As shown in FIG. 5, a peak appeared at around 530.2 eV due to the presence of C-O-Ni bonds in the composite positive active material of Example 1. It was considered that this peak appeared due to a bond between an NiO phase present on the surface of the NCA91 and carbon of graphene. Therefore, it was confirmed that a covalent bond was formed between graphene included in the shell formed on the core and Ni that is a transition metal included in the core.

**Evaluation Example 4: Raman Spectrum Evaluation (Graphene-NCA Chemical Bond)**

The composite prepared in Preparation Example 1 and the composite positive active material prepared in Example 1 were each analyzed by Raman spectroscopy and the results are shown in FIG. 6.

As shown in FIG. 6, a D band peak at 1338.7 $cm^{-1}$ and a G band peak at 1575.0 $cm^{-1}$ appeared due to graphene in the composite prepared in Preparation Example 1.

In contrast, the D band peak was shifted to 1351.3 $cm^{-1}$ by about 12 $cm^{-1}$ and the G band peak was shifted to 1593.6 $cm^{-1}$ by about 18 $cm^{-1}$ due to the shell including graphene in the composite positive active material of Example 1.

It was considered that the D band shift was caused by a strain of graphene constituting the shell formed on the core by milling.

It was considered that the G band shift was caused by charge transfer between the core and graphene in the composite because the composite was formed by the C-O-Ni bond between the core and the shell.

Therefore, it was confirmed that graphene included in the shell formed on the core forms a covalent bond with Ni that is a transition metal included in the core.

**Evaluation Example 5: Evaluation on Cross-section of Electrode**

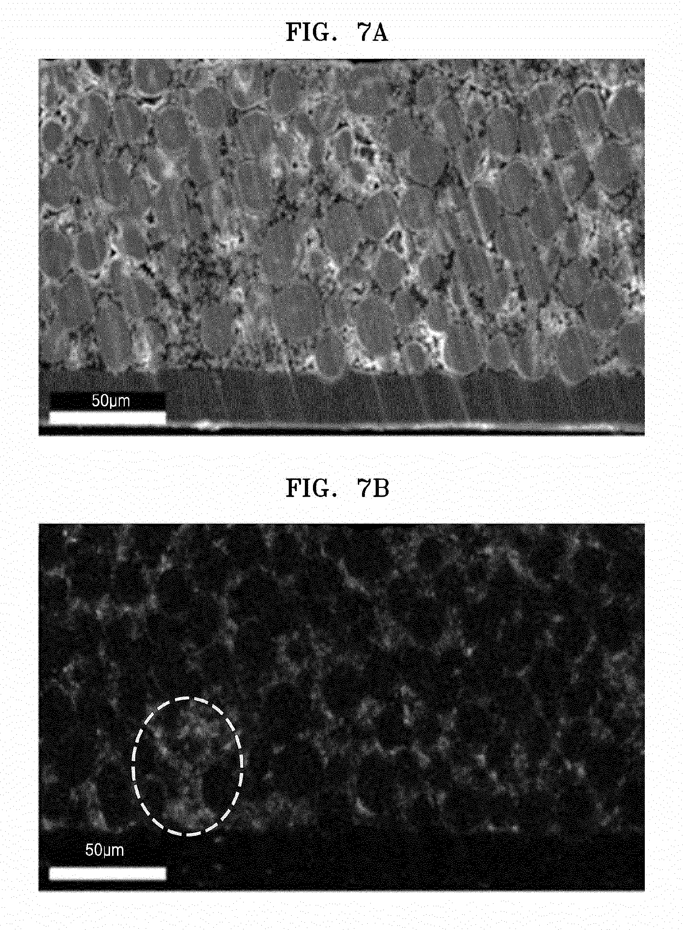

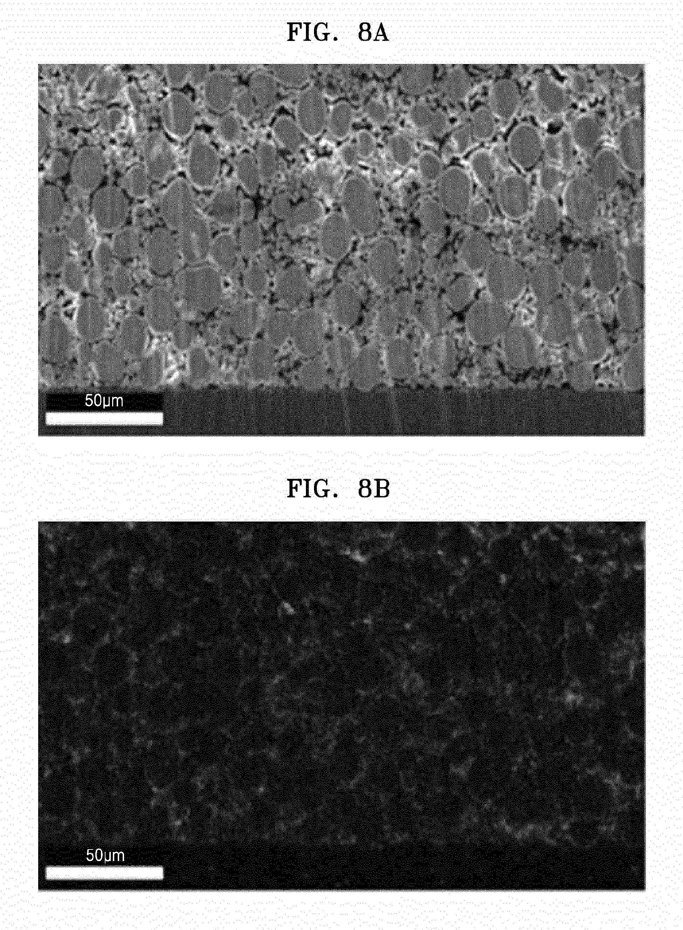

The dry positive electrode prepared in Example 4 and the dry positive electrode prepared in Comparative Example 3 were each evaluated utilizing cross-sectional images obtained by a scanning electron microscope (SEM) and scanning electron microscope-energy-dispersive X-ray spectroscopy (SEM-EDS), and the results are shown in FIGs. 7A, 7B, 8A, and 8B.

FIG. 7A is a SEM image of a cross-section of a dry positive electrode prepared in Comparative Example 3. FIG. 7B is a SEM-EDS mapping image of a cross-section of the dry positive electrode prepared in Comparative Example 3.

FIG. 8A is a SEM image of a cross-section of a dry positive electrode prepared in Example 4. FIG. 8B is a SEM-EDS mapping image of a cross-section of the dry positive electrode prepared in Example 4.

As shown in FIG. 7A and FIG. 7B, it was confirmed that aggregation occurred in the dry positive electrode prepared in Comparative Example 3, because the dry binder was not uniformly dispersed in the dry electrode film. A region where the binder aggregated is indicated by dashed lines.

As shown in FIGs. 8A and 8B, it was confirmed that the dry binder was uniformly dispersed in the dry electrode film in the dry positive electrode prepared in Example 4.

It was considered that because the dry electrode including the composite positive active material having the core/shell structure was utilized in Example 4, the binder and the conductive material are uniformly dispersed in the dry electrode film.

In contrast, it was considered that because the dry electrode including the bare positive active material was utilized in Comparative Example 3, aggregation of the binder and the conductive material was not inhibited in the dry electrode film, so that the binder was non-uniformly dispersed in the dry electrode film.

### Evaluation Example 6: Peel Strength Evaluation

The dry positive electrodes prepared in Example 4 and Comparative Example 3 and the wet positive electrode prepared in Comparative Example 4 were each cut into pieces having a size of 25 mm × 150 mm and fixed to the center of a slide glass having a size of 30 mm × 200 mm utilizing a tape. Then, 90° peel strength was measured while peeling the current collector from the positive active material layer by utilizing a universal testing machine (UTM). Measurement results are shown in Table 1.

Table 1

| | Peel strength [gf/mm] |
|---|---|
| Example 4 $Al_2O_3$@Gr composite 0.4 wt% coating, dry positive electrode | 2.5 |
| Comparative Example 3 bare NCA91, dry positive electrode | 1.9 |
| Comparative Example 4 bare NCA91, wet positive electrode | 1.1 |

As shown in Table 1, the dry positive electrode of Example 4 exhibited improved binding force compared to the dry positive electrode of Comparative Example 3.

It was considered that the binder was more uniformly dispersed in the dry electrode film in the dry positive electrode of Example 4 so that the fibrillized binder facilitated binding of the dry electrode film to the positive electrode current collector more effectively, compared to the dry positive electrode of Comparative Example 3.

Also, the dry positive electrode of Example 4 exhibited improved binding force compared to the wet positive electrode of Comparative Example 4.

### Evaluation Example 7: Tensile Strength Evaluation

Samples (216 mm (Length) × 19±0.5 mm (Width) × 3.18±0.38 mm (Depth)) of the dry positive electrode films prepared in Example 4 and Comparative Example 3 were each prepared for tensile strength measurement according to the ASTM D 638 method, respectively. Tensile strength was measured by a tensile strength test performed according to the ASTM D 638 method. Measurement results are shown in Table 2.

Table 2

| | Tensile strength [kPa] |
|---|---|
| Example 4 $Al_2O_3$@Gr composite 0.4 wt% coating, dry positive electrode | 1041.1 |
| Comparative Example 3 bare NCA91, dry positive electrode | 649.3 |
| Comparative Example 4 bare NCA91, wet positive electrode | -<br>(N/A) |

As shown in Table 2, the dry positive electrode film of Example 4 exhibited improved mechanical strength compared to the dry positive electrode film of Comparative Example 3.

It was considered that the binder was more uniformly dispersed in the dry electrode film in the dry positive electrode of Example 4 so that the fibrillized binder facilitated binding of the composite positive active material more effectively, compared to the dry positive electrode of Comparative Example 3.

### Evaluation Example 8: Mixture Resistance Evaluation

Mixture resistance of each of the dry positive electrodes prepared in Example 4 and Comparative Example 3 and the wet positive electrode prepared in Comparative Example 4 was measured at 25 °C by utilizing an electrode resistance measurement system (Hioki, RM2610), and measurement results are shown in Table 3.

After locating a probe on the positive electrode such that the positive active material of the positive electrode faced the probe and supplying a constant current to the surface of the positive active material layer in the electrode resistance measurement system (Hioki, RM2610), volume resistivity of the positive active material layer and interfacial resistance between the positive active material layer and the positive electrode current collector were measured from surface potential distribution. The volume resistivity of the positive active material layer was regarded as a mixture resistance of the positive active material layer.

Table 3

| | Mixture resistance [$\Omega$cm] |
|---|---|
| Example 4 Al$_2$O$_3$@Gr composite 0.4 wt% coating, dry positive electrode | 3.7 |
| Comparative Example 3 bare NCA91, dry positive electrode | 6.1 |
| Comparative Example 4 bare NCA91, wet positive electrode | 5.2 |

As shown in Table 3, the dry positive electrode of Example 4 had a lower mixture resistance than those the dry positive electrode of Comparative Example 3 and the wet positive electrode of Comparative Example 4.

It was considered that the dry positive electrode of Example 4 had increased electronic conductivity and/or ionic conductivity in the dry positive electrode film because the composite positive active material, in which the shell including the first metal oxide and the first carbonaceous material is uniformly disposed on the core, was utilized.

It was considered that the dry positive electrode of Comparative Example 3 and the wet positive electrode of Comparative Example 4 had low electronic conductivity and/or ionic conductivity because the above-described composite positive active material was not utilized therein.

**Evaluation Example 9: Interfacial resistance Evaluation**

Interfacial resistance of each of the dry positive electrodes prepared in Example 4 and Comparative Example 3 and the wet positive electrode prepared in Comparative Example 4 was measured at 25 °C by utilizing an electrode resistance measurement system (Hioki, RM2610), and measurement results are shown in Table 4.

After locating a probe on the positive electrode such that the positive active material of the positive electrode faced the probe and supplying a constant current to the surface of the positive active material layer in the electrode resistance measurement system (Hioki, RM2610), volume resistivity of the positive active material layer and interfacial resistance between the positive active material layer and the positive electrode current collector were measured from surface potential distribution.

Table 4

| | Interfacial resistance [$\Omega$cm$^2$] |
|---|---|
| Example 4 Al$_2$O$_3$@Gr composite 0.4 wt% coating, dry positive electrode | 0.021 |
| Comparative Example 3 bare NCA91, dry positive electrode | 0.106 |
| Comparative Example 4 bare NCA91, wet positive electrode | 0.043 |

As shown in Table 4, the dry positive electrode of Example 4 had a lower interfacial resistance than those of the dry positive electrode of Comparative Example 3 and the wet positive electrode of Comparative Example 4.

**Evaluation Example 10: Evaluation of Room Temperature (25 °C) Charging/discharging Characteristics**

Each of the lithium batteries prepared in Examples 4 to 6 and Comparative Examples 3 to 5 was charged with a constant current of 0.1 C rate at 25 °C until a voltage reached 4.3 V (vs. Li), and the charging process was cut-off at a rate of 0.05 C rate in a constant voltage mode while the voltage of 4.3 V was maintained. Subsequently, the lithium battery was discharged with a constant current of 0.1 C rate until the voltage reached 2.8 V (vs. Li) during discharging (formation cycle).

The lithium battery that had undergone the formation cycle was charged with a constant current with a current of 0.5 C rate at 25 °C until the voltage reached 4.3 V (vs. Li), and then the charging process was cut-off at a current of 0.05 C rate in a constant voltage mode while maintaining the voltage of 4.3 V. Subsequently, the lithium battery was discharged with a constant current of 0.5 C rate until the voltage reached 2.8 V (vs. Li) during discharging (1st cycle).

The cycle was repeated to a 350th cycle under the same conditions.

The lithium batteries were rested for 10 minutes after every charging/discharging cycle. Some results of the room temperature charging/discharging tests are shown in Table 5. Capacity retention ratio is defined as shown Equation 3.

## Equation 3

Capacity retention ratio [%] = [Discharging capacity at 300th cycle / discharging capacity at 1st cycle] × 100

Table 5

|  | Capacity Retention Ratio [%] |
|---|---|
| Example 4 Al$_2$O$_3$@Gr composite 0.4 wt% coating, dry positive electrode | 94 |
| Example 5 Al$_2$O$_3$@Gr composite 0.4 wt% coating, bimodal active material, dry positive electrode | 96 |
| Example 6 Al$_2$O$_3$@Gr composite 0.2 wt% + CNT 0.05 wt% coating, dry positive electrode | 95 |
| Comparative Example 3 bare NCA91, dry positive electrode | 80 |
| Comparative Example 4 bare NCA91, wet positive electrode | 90 |

As shown in Table 5, the lithium batteries of Examples 4 to 6 each had improved lifespan characteristics compared to those of Comparative Examples 3 and 4.

The lithium batteries of Examples 5 and 6 each had superior lifespan characteristics to that of the lithium battery of Example 4.

Although not shown in Table 5, the lithium battery of Comparative Example 5 had inferior lifespan characteristics to that of the lithium battery of Example 4.

It was considered that the lithium battery of Comparative Example 5 had poor high-voltage stability of the **SiO$_2$@Gr** composite disposed on the NCA91 core.

**Evaluation Example 11: Evaluation of Vertical Force of Positive Active Material Layer (I)**

Binding characteristics of the positive active material layers included in the dry positive electrode of Example 4 and the wet positive electrode prepared in Comparative Example 4 were each analyzed by utilizing SAICAS (SAICAS EN-EX, Daipla Wintes, JAPAN).

Vertical force (Fv) according to depth was measured by performing a constant speed analysis by utilizing a diamond blade with a width of 1 mm under conditions including a clearance angle of 10°, a rake angle of 20°, a shearing angle of 45°, a horizontal velocity of 4 $\mu$m/s, and a vertical velocity of 0.4 $\mu$m/s.

First, a first constant velocity analysis was performed from a first position on the surface of the positive active material layer to the surface of the positive electrode current collector, and the blade was moved horizontally along the surface of the positive electrode current collector to remove the positive active material layer. Then, at a position 10 $\mu$m backward from the first position, a second constant velocity analysis was performed under the same conditions as the first constant velocity analysis. The data measured during the second constant velocity analysis were utilized.

The vertical force of the positive active material layer was measured, and the measured data were normalized with respect to the force graph area to derive the vertical relative force ($F_{VR}$) of the positive active material layer according to depth.

The vertical force of the positive active material layer was obtained by utilizing data measured along the section starting from a first point, which is 5% away from the surface of the positive active material layer, and ending at a second point, which is 5% away from the surface of the electrode current collector, relative to the total thickness of the positive active material layer. For example, data near the surface of the positive active material layer and data near the surface of the electrode current collector were excluded to prevent or reduce measurement errors.

From the derived vertical relative force ($F_{VR}$) data of the positive active material layer, a vertical relative force

($F_{VR}$) change rate was calculated by utilizing Equation 1. In addition, an arithmetic mean value was calculated from the derived vertical relative force ($F_{VR}$) data of the positive active material layer.

## Equation 1

Vertical relative force ($F_{VR}$) change rate = [(maximum value of vertical relative force ($F_{VR1}$) - minimum value of vertical relative force ($F_{VR1}$)) / minimum value of vertical relative force ($F_{VR1}$)] × 100

As a result of measurement, the vertical relative force change rate of the positive active material layer included in the dry positive electrode of Example 4 was 200 % or less.

Therefore, it was confirmed that the positive active material layer of Example 4 (i.e., dry electrode film) had a substantially uniform binding force and composition distribution, regardless of positions according to the thickness direction of the positive active material layer.

In contrast, the vertical relative force change rate of the positive active material layer included in the wet positive electrode of Comparative Example 4 exceeded 400 %.

Therefore, it was confirmed that the binding force and composition distribution significantly changed by positions according to the thickness direction of the positive active material layer in the positive active material layer of Comparative Example 4.

**Evaluation Example 12:** : **Evaluation of Horizontal Force of Positive Active Material Layer (II)**

The binding characteristics of the positive active material layers included in the dry positive electrode prepared in Example 4 and the wet positive electrode prepared in Comparative Example 4 were each analyzed by utilizing SAICAS (SAICAS EN-EX, Daipla Wintes, JAPAN).

Horizontal force ($F_H$) according to depth was measured by performing a constant speed analysis by utilizing a diamond blade with a width of 1 mm under conditions including a clearance angle of 10°, a rake angle of 20°, a shear angle of 45°, a horizontal velocity of 4 $\mu$m/s, and a vertical velocity of 0.4 $\mu$m/s.

First, a first constant velocity analysis was performed from a first position on the surface of the positive active material layer to the surface of the positive electrode current collector, and the blade was moved horizontally along the surface of the positive electrode current collector to remove the positive active material layer. Then, at a position 10 $\mu$m backward from the first position, a second constant velocity analysis was performed under the same conditions as the first constant velocity analysis. The data measured by the second constant velocity analysis were utilized.

With respect to the total thickness of the positive active material layer, the first horizontal force ($F_{H1}$) at the first point, which is 10% away from the surface of the positive active material layer, and the second horizontal force ($F_{H2}$) at the second point, which is 10% away from the surface of the positive electrode current collector, were measured.

The horizontal force ratio of the first point to the second point is defined by Equation 2.

## Equation 2

Horizontal force ratio from the first point to the second point (%) = [$F_{H2}/F_{H1}$]×100

As a result of measurement, the horizontal relative force ratio of the positive active material layer of Example 4 was 60 % or more.

In contrast, the horizontal relative force ratio of the positive active material layer of Comparative Example 4 was less than 50 %.

For example, the horizontal relative force of the positive active material layer of Example 4 was greater than that of the positive active material layer of Comparative Example 4.

Therefore, it was confirmed that the positive active material layer of Example 4 (i.e., dry electrode film) had more substantially uniform binding force and composition distribution than those of the positive active material layer of Comparative Example 4.

According to one or more aspects of embodiments of the present disclosure, because the dry electrode film has reduced internal resistance and improved mechanical properties, cycle characteristics of a lithium battery including the dry electrode film may be improved.

As utilized herein, the singular forms "a," "an," and "the" are intended to include the plural forms as well, unless the context clearly indicates otherwise. Further, the utilization of "may" when describing embodiments of the present disclosure may refer to "one or more embodiments of the present disclosure".

As utilized herein, the terms "substantially," "about," and similar terms are used as terms of approximation and not as terms of degree, and are intended to account for the inherent deviations in measured or calculated values that would be recognized by those of ordinary skill in the art.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

In the present disclosure, when particles or nanotubes are spherical or circular, "size" or "diameter" indicates a particle or nanotube diameter or an average particle or nanotube diameter, and when the particles or nanotubes are non-spherical or non-circular, the "size" or "diameter" indicates a major axis length or an average major axis length. For example, when particles are spherical, "diameter" indicates a particle diameter, and when the particles are non-spherical, the "diameter" indicates a major axis length. The size or diameter of the particles may be measured utilizing a scanning electron microscope or a particle size analyzer. As the particle size analyzer, for example, HORIBA, LA-950 laser particle size analyzer, may be utilized. In the case of the size of the particles is measured utilizing a particle size analyzer, the average particle diameter (or size) is referred to as D50. D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size.

The battery module, battery pack, battery management system, electric vehicle, and/or any other relevant devices or components according to embodiments of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the drawings, it will be understood by those of ordinary skill in the art that one or more suitable changes in form and details may be made therein without departing from the spirit and scope of the disclosure as defined by the following claims and equivalents thereof.

## Claims

1. A dry electrode film comprising:

    a dry electrode active material (100); and
    a dry binder,
    wherein the dry electrode active material (100) comprises:

        a core (10); and
        a shell (20) on a surface of the core (10),

the shell (20) comprises at least one first metal oxide (21) and a first carbonaceous material (22),
the first metal oxide (21) is in a first carbonaceous material matrix, and
the first metal oxide (21) is represented by formula $M_aO_b$ (where $0<a\leq3$, $0<b<4$, and in the case where a is 1, 2, or 3, b is not an integer), M comprising at least one selected from elements of Groups 2 to 16 of the periodic table.

2. The dry electrode film of claim 1, wherein the first metal oxide (21) comprises at least one metal selected from Al, Nb, Mg, Sc, Ti, Zr, V, W, Mn, Fe, Co, Pd, Cu, Ag, Zn, Sb, and Se, and
the first metal oxide (21) is at least one selected from $Al_2O_z$ (where $0<z<3$), $NbO_x$ (where $0<x<2.5$), $MgO_x$ (where $0<x<1$), $Sc_2O_z$ (where $0<z<3$), $TiO_y$ (where $0<y<2$), $ZrO_y$ (where $0<y<2$), $V_2O_z$ (where $0<z<3$), $WO_y$ (where $0<y<2$), $MnO_y$ (where $0<y<2$), $Fe_2O_z$ (where $0<z<3$), $Co_3O_w$ (where $0<w<4$), $PdO_x$ (where $0<x<1$), $CuO_x$ (where $0<x<1$), $AgO_x$ (where $0<x<1$), $ZnO_x$ (where $0<x<1$), $Sb_2O_z$ (where $0<z<3$), and $SeO_y$ (where $0<y<2$).

3. The dry electrode film of claim 1 or 2, wherein the shell (20) further comprises a second metal oxide,

the second metal oxide is represented by formula $M_aO_c$ (where $0<a\leq3$, $0<c\leq4$, and in the case where a is 1, 2, or 3, c is an integer),
the second metal oxide comprises the same metal as that of the first metal oxide (21),
a c/a ratio of the second metal oxide has a greater value than a b/a ratio of the first metal oxide (21), and
the second metal oxide is in the first carbonaceous material matrix,
whereby preferably the second metal oxide is selected from $Al_2O_3$, $NbO$, $NbO_2$, $Nb_2O_5$, $MgO$, $Sc_2O_3$, $TiO_2$, $ZrO_2$, $V_2O_3$, $WO_2$, $MnO_2$, $Fe_2O_3$, $Co_3O_4$, $PdO$, $CuO$, $AgO$, $ZnO$, $Sb_2O_3$, and $SeO_2$, and
the first metal oxide (21) is a reduction product of the second metal oxide.

4. The dry electrode film of any of the claims 1 to 3, wherein the shell (20) has a thickness of about 0.1 nm to about 5 $\mu$m and has a single-layer or multi-layer structure, and
the shell (20) is a dry coating layer, and an amount of the shell (20) is 5 wt% or less based on a total weight of the dry electrode active material (100).

5. The dry electrode film of any of the claims 1 to 4, further comprising a third metal doped on the core (10) or a third metal oxide coated on the core (10),

wherein the shell (20) is on the third metal oxide, and
the third metal oxide is an oxide of the third metal comprising at least one selected from Al, Zr, W, and Co.

6. The dry electrode film of any of the claims 1 to 5, wherein the shell (20) further comprises a second carbonaceous material (23),

the second carbonaceous material (23) comprises a fibrous carbonaceous material having an aspect ratio of 10 or more,
the second carbonaceous material (23) comprises carbon nanofibers, carbon nanotubes, or a combination thereof,
the carbon nanotubes comprise a carbon nanotube primary structure, a carbon nanotube secondary structure formed by aggregation of a plurality of carbon nanotube primary particles, or a combination thereof, and
the carbon nanotube primary structure is one carbon nanotube unit.

7. The dry electrode film of any of the claims 1 to 6, wherein the core (10) comprises a lithium transition metal oxide, preferably the lithium transition metal oxide is represented by one selected from Formulae 1 to 8:

Formula 1      $Li_aNi_xCo_yM_zO_{2-b}A_b$

wherein in Formula 1,

$1.0\leq a\leq1.2$, $0\leq b\leq0.2$, $0.8\leq x\leq1$, $0\leq y\leq0.3$, $0<z\leq0.3$, and $x+y+z=1$,
M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
A is F, S, Cl, Br, or a combination thereof,

Formula 2 $\quad\quad LiNi_xCo_yMn_zO_2$

Formula 3 $\quad\quad LiNi_xCo_yAl_zO_2$

in Formulae 2 and 3, $0.8 \leq x \leq 0.95$, $0 \leq y \leq 0.2$, $0 < z \leq 0.2$, and $x+y+z=1$,

Formula 4 $\quad\quad LiNi_xCo_yMn_zAl_wO_2$

in Formula 4, $0.8 \leq x \leq 0.95$, $0 \leq y \leq 0.2$, $0 < z \leq 0.2$, $0 < w \leq 0.2$, and $x+y+z+w=1$,

Formula 5 $\quad\quad Li_aCO_xM_yO_{2-b}A_b$

in Formula 5,

> $1.0 \leq a \leq 1.2$, $0 \leq b \leq 0.2$, $0.9 \leq x \leq 1$, $0 \leq y \leq 0.1$, and $x+y=1$,
> M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
> A is F, S, Cl, Br, or a combination thereof,

Formula 6 $\quad\quad Li_aNi_xMn_yM'_zO_{2-b}A_b$

in Formula 6,

> $1.0 \leq a \leq 1.2$, $0 \leq b \leq 0.2$, $0 < x \leq 0.3$, $0.5 \leq y < 1$, $0 < z \leq 0.3$, and $x+y+z=1$,
> M' is cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and
> A is F, S, Cl, Br, or a combination thereof,

Formula 7 $\quad\quad Li_aM1_xM2_yPO_{4-b}X_b$

in Formula 7, $0.90 \leq a \leq 1.1$, $0 \leq x \leq 0.9$, $0 \leq y \leq 0.5$, $0.9 < x+y < 1.1$, and $0 \leq b \leq 2$,

> M1 is chromium (Cr), manganese (Mn), iron (Fe), cobalt (Co), nickel (Ni), copper (Cu), zirconium (Zr), or a combination thereof, and
> M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof, and X is O, F, S, P, or a combination thereof,

Formula 8 $\quad\quad Li_aM3_zPO_4$

in Formula 8, $0.90 \leq a \leq 1.1$ and $0.9 \leq z \leq 1.1$, and
M3 is chromium (Cr), manganese (Mn), iron (Fe), cobalt (Co), nickel (Ni), copper (Cu), zirconium (Zr), or a combination thereof.

8. The dry electrode film of any of the claims 1 to 7, wherein the shell (20) comprises a first metal oxide (21) and the first carbonaceous material (22), and the core (10) comprises a lithium transition metal oxide, and wherein,

> the first carbonaceous material (22) is chemically bound to a transition metal (Me) of the lithium transition metal oxide by a chemical bond,

a carbon atom (C) of the first carbonaceous material (22) is chemically bound to the transition metal (Me) of the lithium transition metal oxide via an oxygen atom through a C-O-Me bond, or
the first metal oxide (21) is chemically bound to the a first carbonaceous material (22) by a chemical bond.

9. The dry electrode film of any of the claims 1 to 8, wherein the dry electrode active material (100) comprises a first and a second dry electrode active material, and

    wherein the first dry electrode active material and the second dry electrode active material have different particle diameters
    and/or
    the first dry electrode active material is a large-diameter dry electrode active material having a greater particle diameter than that of the second dry electrode active material, and
    the second dry electrode active material is a small-diameter dry electrode active material having a smaller particle diameter than that of the first dry electrode active material;
    and/or
    the first dry electrode active material and the second dry electrode active material have a bimodal particle diameter distribution in a particle diameter distribution chart,
    a particle diameter ratio of the first dry electrode active material to the second dry electrode active material is from about 3:1 to about 40:1,
    a particle diameter of the first dry electrode active material is greater than 8 $\mu$m and equal to or less than 30 $\mu$m, and a particle diameter of the second dry electrode active material is equal to or greater than 1 $\mu$m and less than 8 $\mu$m,
    the second dry electrode active material comprises primary particles having a particle diameter of 1 $\mu$m or more, and
    a weight ratio of the first dry electrode active material to the second dry electrode active material is from about 90:10 to about 60:40.

10. The dry electrode film of any of the claims 1 to 9, wherein the dry binder comprises a fibrillized binder,

    the dry binder comprises a fluorine-based binder,
    the dry binder has a glass transition temperature ($T_g$) of about 15 °C to about 100 °C, and
    an amount of the dry binder is from about 0.1 wt% to about 5 wt% based on a total weight of the dry electrode film.

11. The dry electrode film of any of the claims 1 to 10, wherein the dry electrode film further comprises a dry conductive material,

    the dry conductive material comprises a carbonaceous conductive material,
    the carbonaceous conductive material comprises a fibrous carbonaceous material having an aspect ratio of 10 or more, a particulate carbonaceous material having an aspect ratio less than 10, or a combination thereof, and
    an amount of the dry conductive material is from about 0.1 wt% to about 5 wt% based on a total weight of the dry electrode film.

12. The dry electrode film of any of the claims 1 to 11, wherein the dry electrode film is a self-standing film, and the dry electrode film does not comprise a residual processing solvent, and
a tensile strength of the dry electrode film is from about 500 kPa to about 5000 kPa.

13. A dry electrode comprising:

    an electrode current collector; and
    the dry electrode film according to any of the claims 1 to 12, the dry electrode film being on at least one side of the electrode current collector.

14. The dry electrode of claim 13, wherein the electrode current collector comprises: a substrate; and an interlayer between the substrate and the dry electrode film, and

    the interlayer comprises a carbonaceous conductive material,
    and/ or
    the electrode current collector comprises a base film and a metal layer on at least one side of the base film, and

the dry electrode film is on the metal layer,
the base film comprises a polymer, and the polymer comprises polyethyleneterephthalate (PET), polyethylene (PE), polypropylene (PP), polybutyleneterephthalate (PBT), polyimide (PI), or a combination thereof, and
the metal layer comprises indium (In), copper (Cu), magnesium (Mg), titanium (Ti), iron (Fe), cobalt (Co), nickel (Ni), zinc (Zn), aluminum (Al), germanium (Ge), lithium (Li), or an alloy thereof.

15. A lithium battery (1) comprising:

a first electrode; a second electrode; and an electrolyte between the first electrode and the second electrode,
wherein the first electrode, the second electrode, or a combination thereof is the dry electrode according to claim 14, and
the electrolyte comprises a liquid electrolyte, a solid electrolyte, a gel electrolyte, or a combination thereof.

# FIG. 1

10                                    100

21 ⎱
   ⎰ 20
22

# FIG. 2

10                                    100

21 ⎱
22 ⎰ 20
23

## FIG. 3

4800 15.0kV 7.5mm x100k SE(M)    500nm

## FIG. 4

S4800 15.0kV 7.7mm x100k SE(M)    500nm

# FIG. 5

—— Comparation  ----- Example 1  —— Preparation
Example 1                        Example 1

Binding Energy (eV)

# FIG. 6

Raman shift (cm$^{-1}$)

FIG. 7A

FIG. 7B

FIG. 8A

FIG. 8B

# FIG. 9

# FIG. 10

# FIG. 11

1

4
2
4
3

7

8

5

Europäisches
Patentamt

European
Patent Office

Office européen
des brevets

# EUROPEAN SEARCH REPORT

**Application Number**

EP 23 21 2311

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/376314 A1 (SON INHYUK [KR] ET AL) 2 December 2021 (2021-12-02) * claims 1-9, 12, 16 * | 1-10, 12-15 | INV.<br>H01M4/131<br>H01M4/133<br>H01M4/36 |
| X | WO 2022/191639 A1 (SAMSUNG SDI CO LTD [KR]) 15 September 2022 (2022-09-15) * abstract * | 1-3,7, 12-15 | H01M4/48<br>H01M4/505<br>H01M4/525 |
| E | & EP 4 307 407 A1 (SAMSUNG SDI CO LTD [KR]) 17 January 2024 (2024-01-17) * claims 1-12, 16 * | 1-3,7, 12-15 | H01M4/587<br>H01M4/62<br>H01M10/0525 |
| X | WO 2022/211589 A1 (SAMSUNG SDI CO LTD [KR]) 6 October 2022 (2022-10-06) * abstract * | 1-4,7, 12-15 | |
| E | & EP 4 318 652 A1 (SAMSUNG SDI CO LTD [KR]) 7 February 2024 (2024-02-07) * claims 1-11, 14 * | 1-4,7, 12-15 | |
| X | US 2022/320498 A1 (KAPYLOU ANDREI [KR] ET AL) 6 October 2022 (2022-10-06) * claims 1, 2, 4, 6-8, 10, 12 * | 1,2,4,7, 13-15 | |
| X | US 10 276 870 B2 (SAMSUNG ELECTRONICS CO LTD [KR]) 30 April 2019 (2019-04-30) * columns 11, 12; example 1 * * columns 20, 21; example 12 * | 1,2,4,7, 11-15 | **TECHNICAL FIELDS SEARCHED (IPC)**<br><br>H01M |

The present search report has been drawn up for all claims

| Place of search | Date of completion of the search | Examiner |
|---|---|---|
| Munich | 5 May 2024 | Martín Fernández, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 2311

This annex lists the patent family members relating to the patent documents cited in the above-mentioned European search report.
The members are as contained in the European Patent Office EDP file on
The European Patent Office is in no way liable for these particulars which are merely given for the purpose of information.

05-05-2024

| Patent document cited in search report | | | Publication date | Patent family member(s) | | | Publication date |
|---|---|---|---|---|---|---|---|
| US 2021376314 | A1 | | 02-12-2021 | CN | 113764665 | A | 07-12-2021 |
| | | | | EP | 3923380 | A1 | 15-12-2021 |
| | | | | JP | 7348231 | B2 | 20-09-2023 |
| | | | | JP | 2021190431 | A | 13-12-2021 |
| | | | | KR | 20210148741 | A | 08-12-2021 |
| | | | | US | 2021376314 | A1 | 02-12-2021 |
| WO 2022191639 | A1 | | 15-09-2022 | CN | 117043986 | A | 10-11-2023 |
| | | | | EP | 4307407 | A1 | 17-01-2024 |
| | | | | JP | 2024509859 | A | 05-03-2024 |
| | | | | KR | 20220127002 | A | 19-09-2022 |
| | | | | WO | 2022191639 | A1 | 15-09-2022 |
| WO 2022211589 | A1 | | 06-10-2022 | CN | 117157778 | A | 01-12-2023 |
| | | | | EP | 4318652 | A1 | 07-02-2024 |
| | | | | JP | 2024512742 | A | 19-03-2024 |
| | | | | KR | 20220136751 | A | 11-10-2022 |
| | | | | WO | 2022211589 | A1 | 06-10-2022 |
| US 2022320498 | A1 | | 06-10-2022 | CN | 115207300 | A | 18-10-2022 |
| | | | | EP | 4068421 | A1 | 05-10-2022 |
| | | | | JP | 2022159208 | A | 17-10-2022 |
| | | | | KR | 20220136752 | A | 11-10-2022 |
| | | | | US | 2022320498 | A1 | 06-10-2022 |
| US 10276870 | B2 | | 30-04-2019 | KR | 20150017012 | A | 16-02-2015 |
| | | | | US | 2015037680 | A1 | 05-02-2015 |

EPO FORM P0459

For more details about this annex : see Official Journal of the European Patent Office, No. 12/82

**EP 4 394 919 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020220186371